# EUROPÄISCHE PATENTSCHRIFT

(11) **EP 0 941 914 B1**
(45) Veröffentlichungstag und Bekanntmachung des Hinweises auf die Patenterteilung: **23.10.2002**
(21) Anmeldenummer: 99103950.4
(22) Anmeldetag: 09.03.1998
(51) Int. Cl.: B62D 37/04

(54) **Antikippkraftgenerator für Fahrzeuge**
Anti flip-over force generator for vehicles
Générateur de force anti-retournement pour véhicules

(30) Priorität: 09.03.1998 EP 98104132
(43) Veröffentlichungstag der Anmeldung: 15.09.1999
(73) Patentinhaber: Kastriot, Merlaku, 80807 München (DE)
(72) Erfinder: Kastriot, Merlaku, 80807 München (DE)

(56) Entgegenhaltungen:
- US-A- 3 373 832

## Beschreibung

Die Erfindung betrifft eine Antikippvorrichtung, welche während Kurvenfahrten eines Fahrzeuges, insbesondere bei abrupten Ausweichmanövern, die Umkippgefahr abbaut oder beseitigt.

Die Erfindung geht von dem im Oberbegriff des Patentanspruches 1 definierten Konzept einer solchen Antikippvorrichtung aus, das bereits durch die Druckschriften
D1: GB-A- 990 933, insbesondere durch deren Figuren,
D2: FR-A1-2 620 540, insbesondere durch deren Fig. 1 und Patentanspruch 1,
D3: US-A-3 373 832, insbesondere durch deren Fig. 20 bis 22 sowie 24, 25 und 26, bekannt ist. Gemäß diesem Konzept enthält eine solche Antikippvorrichtung eine Schwungmasse, die im Betrieb um eine Hauptachse schnell rotiert. Diese Hauptachse ist zumindest angenähert quer zur Fahrtrichtung und - bezogen auf eine ebene waagrechte Fahrbahn - im wesentlichen waagrecht gelagert. Dabei rotiert die Schwungmasse - quer zur Fahrtrichtung von links her auf das Fahrzeug gesehen - im Uhrzeigersinn, wobei der Schwerpunkt der rotierenden Schwungmasse zumindest angenähert in der Hauptachse liegt.

Die Schwungmasse wird schon bei den bekannten Antikippvorrichtungen auf verschiedene Weisen angetrieben, z.B. durch einen Elektromotor oder durch ein eigenes Getriebe, das seinerseits z.B. von einem Zahnrad am Eingang oder Ausgang des üblichen Fahrzeugmotorgetriebes angetrieben wird - im letzteren fall kann die Rotationsfrequenz der Schwungmasse leicht der jeweiligen Fahrgeschwindigkeit angepaßt werden.

Solche Antikippvorrichtungen können gemäß D2, insbesondere Seite 2, Zeilen 21ff schon beim Stand der Technik nicht nur gegen das Kippen von Landfahrzeugen verwendet werden, sondern auch von radlosen Fahrzeugen wie Flugschiffen bzw. Flugzeugen, bei denen die Fahrbahn also eine Luftstraße ist.

Seit Jahrzehnten besteht ein dringender Bedarf für weitere Verbesserungen der Sicherheit der Fahrzeuge während Ausweichbewegungen und Kurvenfahrten - besonders sobald das Fahrzeug mehrfach Ausweichmanöver hintereinander zu absolvieren hat, was zu starkem Aufschaukeln der Kippbewegungen führen kann. Viele aktuelle Berichte in Fachzeitschriften gehen auf diesen Bedarf ein, z.B.:
D4: "Auto, Motor und Sport", Vereinigte Motor-Verlage, Stuttgart, Heft 24, 14 November 1997, Seiten 12, 13, 14 und 15
D5: "Auto Zeitung", Heinrich Bauer Spezialzeitschriften Verlag, Köln, Heft Nr.24, 07.November 1997, Seiten 32, 33, 34, 35, 36 und 37
D6: "Focus", München, Nr.47, 17. November 1997, Seiten: 354, 355, 356 und 358
D7: "Auto Test Technik", Vereinigte Motor-Verlage, Stuttgart, Nr.24, 08.November 1997, Seiten. 3, 6 und 7
D8: "Stern", GRUNER+JAHR, Hamburg, Heft Nr. 1, 23.12.1997, Seiten: 116 und 117
D9: "Bild", Axel Springer Verlag, Hamburg, 19.Dezember 1997, Seiten: 1 und 8
D10: "Auto Journal", Neuer Auto Verlag, Schwabach, Heft Nr.3, März 1998, Seite 5

Die bekannten Antikippvorrichtungen gestatten insbesondere bereits, in den Insassen von einem Pkw, Bus oder Lkw ein gewisses Sicherheitsgefühl aufkommen zu lassen mangels des gefährlichen - meistens auch als unangenehm empfundenen - Kippens zur Außenseite der Kurve hin. Dabei ist es objektiv günstig, daß im Idealfall in der Kurve ein weitgehend gleichmäßig guter Bodenkontakt aller seiner Räder bei fast gleichmäßiger Druckkraft auf die kurvenäußeren und -inneren Räder auftritt. Die Kippgefahr ist bekanntlich um so größer, je höher die Geschwindigkeit des Fahrzeuges und je höher und schmaler das Fahrzeug ist sowie je höher sein Schwerpunkt oberhalb der Fahrbahn liegt - und sei es auch nur wegen ungünstiger Beladung, z.B. durch auf dem Dach befestigtes schweres Gepäck.

Das bekannte Konzept für Antikippvorrichtungen läßt bereits verschiedene Freiheitsgrade für mehr oder weniger befriedigende Optimierungen: Die im Stand der Technik beschriebenen Konzepte gestatten nämlich bereits, jeweils das Gewicht der Schwungmasse bzw. deren Trägheitsmoment zu optimieren. Man kann auch noch die Rotationsfrequenz der Schwungmasse sowie die Rotationsfrequenz und deren laufende Änderungen optimieren. Übrigens zeigt der gattungsgemäße, nächst liegende Stand der Technik, vgl. die Fig. 20 und 21 von D3, daß man in Sonderfällen auch durch Abändern der Richtung der Hauptachse einem gewissen Bedarf entsprechen kann.

Auch bei der Erfindung sind diese Freiheitsgrade der Dimensionierung grundsätzlich gegeben. Die Erfindung löst aber darüber hinaus die Aufgabe,
- mindestens zwei zusätzliche Freiheitsgrade für die Dimensionierung der Antikippvorrichtung anzubieten, nämlich weitere Dimensionierungsparameter hinsichtlich Gestaltung und Betriebsweise der Antikippvorrichtung,
- damit insbesondere die Möglichkeit anzubieten, leicht die Antikippvorrichtung an Bedürfnisse von Fahrzeuginsassen anzupassen, insbesondere den bisher oft störenden Einfluß der Antikippvorrichtung auf das Lenkverhalten des Fahrzeuges zu verringern und damit die Lenkung trotz des Anbringens der Antikippvorrichtung leichtgängig zu machen,
- also während Kurvenfahrten das Kippen des Fahrzeuges um dessen Längsachse mehr oder weniger zu kompensieren oder zu überkompensieren, ohne gleichzeitig das Drehen dieses Fahrzeuges um dessen Vertikalachse erheblich zu beeinträchtigen.

Diese Aufgabe der Erfindung wird durch die im Patentanspruch 1 angegebenen Maßi nahmen gelöst. Zusätzliche Freiheitsgrade für die Dimensionierung der Antikippvorrichtung gestattet die Erfindung also dadurch, daß nun bedarfsangepaßte Dimensionierungen sowohl der Aufteilung der Schwungmasse in mehrere, gegeneinander bewegbare Sektormassen als auch der Stärke der Korrigierstöße der Fixiereinrichtung ermöglicht werden.

Bei der Erfindung ist im Prinzip egal, wie hoch der Schwerpunkt des betreffenden Fahrzeuges liegt, oder wie schmal es ist oder wie falsch beladen - trotzdem ist insbesondere die Leichtgängigkeit der Lenkung bei nahezu beliebig großer Antikippkraft zu erreichen. Besondere Weiterbildungen der Erfindung gestatten sogar, je nach dem momentanen Wunsch des Fahrers das Kippverhalten seines Fahrzeuges ständig oder vorübergehend zu ändern: insbesondere entsprechend der aktuellen Beladung seines Fahrzeuges und entsprechend seinem momentanen sonstigen Wünschen, und zwar, wie noch erläutert wird, selbst noch nach dem Einbau der Erfindung in das Fahrzeug - der Fahrer kann dann nämlich beliebig, z.B. mittels eines Wahlschalters oder Schiebers durch elektrisch gesteuertes Vergrößern und Verkleinern der Rotationsfrequenz der Sektormassen und/oder durch Beeinflussen der Korrigierstöße, das momentan gewünschte Kurvenverhalten seines Fahrzeuges vorwählen, z.B. gemäß: "(Noch stärkeres) Einknicken zur Innenseite der Kurve hin" oder "Vermeiden von Einknicken" oder auch "(Leichtes) Einknicken zur Außenseite der Kurve hin".

Die Erfindung kann nicht nur für alle Typen von Landfahrzeugen mit auf Fahrbahnen abrollenden Rädern verwendet werden - also nicht nur für Pkw, Lkw, Busse, Anhänger, Krafträder und schienengebundene Fahrzeuge wie Eisenbahnen und Einschienenbahnen, z.B. nach Art des Transrapid. Die Erfindung kann auch für räder- und schienenlose Fahrzeuge verwendet werden, z.B. für auf Luftpolstern schwebende Fahrzeuge, auch für Schiffe, deren Fahrbahn also eine Wasserfläche ist, sowie für alle Arten von Fahrzeugen, deren Fahrbahnen Luftwege, Luftstraßen oder Routen im Vakuum des Weltalls sind wie bei Flugzeugen, Flugschiffen, Raketen, Weltraumfahrzeugen und Satelliten.

Die Erfindung und Weiterbildungen derselben werden anhand der in den Figuren dargestellten Beispiele weiter erläutert, wobei diese Figuren wegen der besseren Übersichtlichkeit i.allg. jeweils nur grob das Schema des betreffenden Beispieles zeigen:
- Die Fig. 1 zeigt schematisch eine mögliche Anordnung der Erfindung in einem Pkw.
- Die Fig. 2 und 3 betreffen ein Beispiel der in Sektormassen aufgeteilten Schwungmasse in den Ansichten quer zur Fahrtrichtung und in Fahrtrichtung.
- Die Fig. 4 und 5 betreffen zwei Beispiele, wie die Fixiereinrichtung die während Kurvenfahrten tendenziell in der Abweichebene rotierenden Sektormassen zwingen kann, in der Dauer zwischen zwei Korrigierstößen eher, oder völlig, in der Hauptebene weiterzurotieren - oder sogar darüber hinaus in der Schwenkebene weiterzurotieren.
- Die Fig. 6 zeigt, wie Sensorsignale mittels in Gelenken angebrachten Sensorspulen erzeugt werden können sowie wie Korrigierstöße mittels Reibeflächen erzeugt werden können.
- Die Fig. 7 und 8 betreffen eine Weiterbildung der Erfindung in den Ansichten quer zur Fahrtrichtung und in Fahrtrichtung, wobei hier die Schwungmasse in mehrere, auf derselben Hauptachse nebeneinander liegende, für sich schwenkbare Sektormassen aufgeteilt ist.
- Die Fig. 9 bis 13 betreffen eine Weiterbildung, bei der eine Flüssigkeit als Sektormassen verwendet wird.
- Die Fig. 14 bis 16 betreffen ursprünglich unerwartete Sonderanwendungs-Möglichkeiten der Erfindung und ihrer Weiterbildungen.
- Die Fig. 17 und 18 betreffen eine Weiterbildung der Erfindung, bei der die Fixiereinrichtung ihre Korrigierstöße mittels hydraulischer wirkender Ablenkelemente erzeugt.

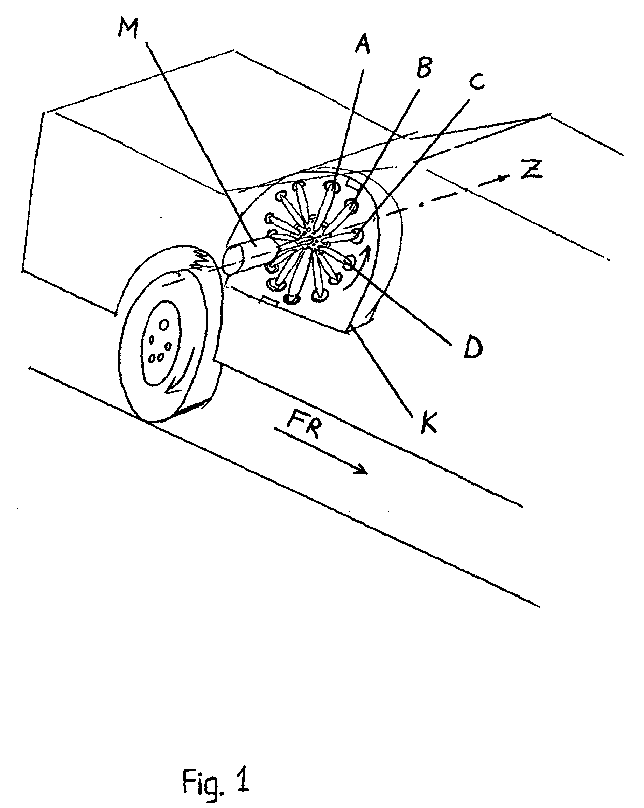

Die Fig. 1 zeigt beispielhaft, wie eine einzige erfindungsgemäße Antikippvorrichtung in einem Pkw angebracht ist, hier beispielhaft in etwa in der Mitte zwischen dessen Hinterrädern. Diese Antikippvorrichtung soll im Betrieb die Umkippgefahr während Kurvenfahrten, insbesondere bei Ausweichmanövern, abbauen oder beseitigen. Man kann auch gleichzeitig mehrere, z.B. zwei, solche Antikippvorrichtungen in ein Fahrzeug einbauen, z.B. jeweils dicht links und rechts nahe bei den Fahrzeugseitenwänden, insbesondere um im Fahrzeuginneren viel nutzbaren freien Raum für Personen und/oder für technische Einrichtungen und/oder für Gepäckstücke bzw. Frachtgüter zu gewinnen.

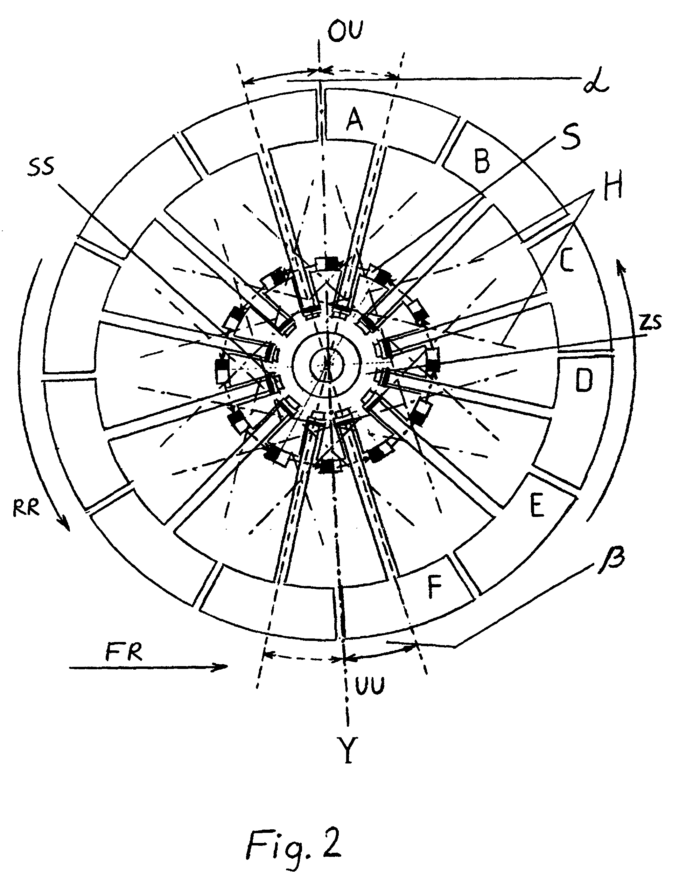

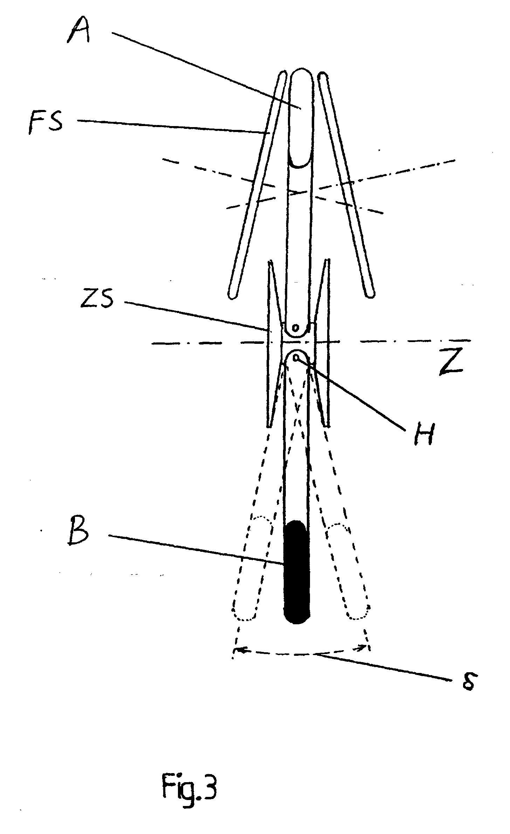

Bei der Erfindung ist die Schwungmasse nicht kompakt wie bei den bekannten Antikippvorrichtungen, sondern entlang ihres Umfanges in mindestens zwei an der Hauptachse z befestigte Sektormassen aufgeteilt, hier in die rund 1 Dutzend verschiedenen Sektormassen A, B, C, D, ...., vgl. auch die Fig. 2 und 3. Die Fig. 1 zeigt, daß die gesamte, aus den verschiedenen Sektormassen bestehende Schwungmasse - im Betrieb z.B. von einem Elektromotor M angetrieben - mit hoher Rotationsfrequenz um die Hauptachse z rotiert, die ihrerseits zumindest angenähert quer zur Fahrtrichtung und - bezogen auf eine ebene waagrechte Fahrbahnim wesentlichen waagrecht gelagert ist. Der Schwerpunkt der Gesamtheit der rotierenden Sektormassen liegt zumindest angenähert in der Hauptachse. Die Sektormassen rotieren dabei - quer zur Fahrtrichtung von links her auf das Fahrzeug gesehen - im Uhrzeigersinn, also entgegengesetzt der Drehrichtung der Fahrzeugräder, vgl. auch die in der detailreicheren Fig. 2 eingetragene Fahrtrichtung FR des Fahrzeuges mit der dort ebenfalls eingetragenen Rotationsrichtung RR.

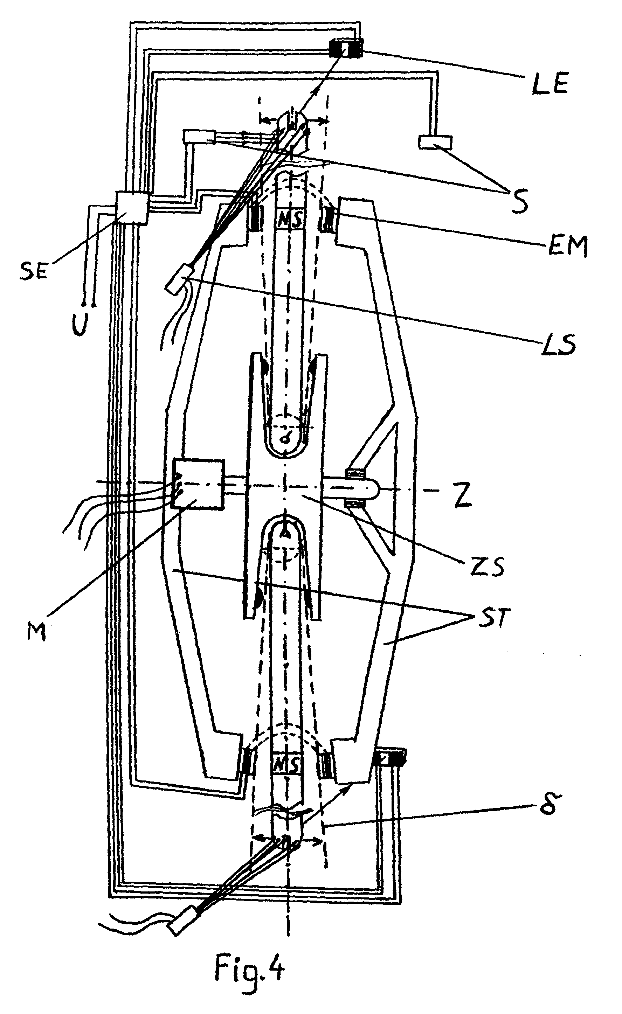

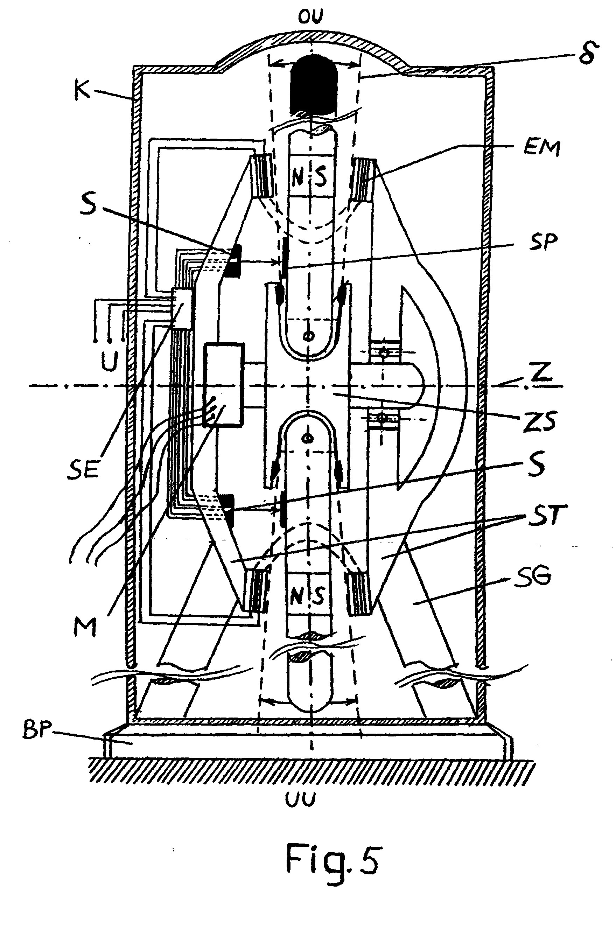

Jede einzelne der Sektormassen A, B, C, D, .... ist erfindungsgemäß jeweils um ihre Befestigung an der Hauptachse z seitlich leicht schwenkbar, also parallel - oder weitgehend parallel - zur Richtung dieser Hauptachse z schwenkbar. Diese Befestigung an der Hauptachse besteht also z.B. aus einem federnden Blechstreifen oder aus einem schwenkbarem Gelenk. Vgl. dazu auch die Gelenkachsen H in den detailreicheren Fig. 2 und 3, z.B. auch die Gelenkachsen in den Fig. 4 und 5. Im Prinzip ist es aber - z.B. zur Beeinflussung des Lenkverhaltens des Fahrzeuges - auch bei der Erfindung möglich, einzelne der verschiedenen Sektormassen an der Hauptachse z starr zu befestigen und nur den Rest der Sektormassen schwenkbar. Hier sei aber der Einfachheit halber angenommen, alle Sektormassen seien erfindungsgemäß - zumindest angenähert - parallel zur Hauptachse z schwenkbar.

Weil die Sektormassen seitlich schwenkbar sind, also sich seitlich mehr oder weniger frei bewegen können, stabilisiert sich das Rotieren der Sektormassen bei Geradeausfahrt in der Weise, daß alle Sektormassen angenähert in derselben Ebene rotieren. Sobald aber das Fahrzeug seine Fahrtrichtung ändert (nach links oder rechts), dreht sich die Richtung der fest mit dem Fahrzeug verbundenen Hauptachse z um die senkrechte Fahrzeugachse, was Carioliskräfte auslöst - damit insbesondere Antikippkräfte auslöst, welche auf der Kurvenaußenseite das Fahrzeug anheben und damit die Kippgefahr verringern oder beseitigen können. Dadurch hat zwar jede einzelne rotierende Sektormasse bei Geradeausfahrt des Fahrzeuges auf ebener Fahrbahn aufgrund der Trägheit der Sektormassen die Tendenz, in einer senkrecht zur Hauptachse z liegenden Hauptebene zu rotieren, aber in einer Kurve die Tendenz, zunächst in einer davon abweichenden Abweichebene zu rotieren. Die Hauptebene und die Abweichebene schneiden sich demnach mit einem endlichen Winkel - hier genannt positiver Abweichwinkel -, und zwar in einer Schnittlinie, die senkrecht zur Hauptachse z sowie, jedenfalls angenähert, senkrecht zur momentanen Fahrtrichtung verläuft.

Sieht man von den Auswirkungen der nachher beschriebenen Korrigierstöße ab, dann befinden sich während Kurvenfahrten die Schwerpunkte aller Sektormassen - bei jeder ihrer Rotationen um die Hauptachse z - nur zweimal, und dann nur kurzzeitig, in einer rechtwinkligen Position zur Hauptachse z - nämlich solange sich die Sektormassen in der Schnittlinie zwischen der Abweichebene und der Hauptebene, also im oberen Umlaufpunkt OU und unteren Umlaufpunkt UU ihrer Rotationsbahn befinden, vgl. dazu insbesondere die Fig. 2.

Während Kurvenfahrten rotieren die schwenkbaren Sektormassen erfindungsgemäß aber nicht ständig in ihrer Abweichebene weiter. Statt dessen werden während Kurvenfahrten kurze seitliche Korrigierstöße, nämlich angenähert parallel zur Hauptachsenrichtung z, auf jeweils zumindest eine der Sektormassen ausgeübt, sobald sich deren Schwerpunkt während ihres Rotierens um die Hauptachse z zumindest angenähert jeweils im oberen Umlaufpunkt OU und/oder unteren Umlaufpunkt UU befindet, vgl. die Fig. 1. Dieser von einem Ablenkelement erzeugte Korrigierstoß zwingt die kurzzeitig von ihm gestoßene Sektormasse, - jedenfalls vorübergehend im Bereich des oberen Umlaufpunktes OU und/oder des unteren Umlaufpunktes UU - in verstärktem Maße (oder völlig) in der Hauptebene weiterzurotieren statt in der bisherigen Abweichebene weiterzurotieren. Falls besonders starke Korrigierstöße mittels entsprechender Ablenkelemente angewendet werden, rotieren die gerade gestoßenen Sektormassen - jedenfalls im Bereich der betreffenden Umlaufpunkte OU/UU, also vorübergehend - sogar darüber hinaus in einer Schwenkebene, die einen negativen Winkel zur Hauptebene aufweist.

Auf diese Weise erzwingen während Kurvenfahrten die Korrigierstöße, daß die gerade von ihnen gestoßene rotierende Sektormasse immer wieder weg von ihrer bisherigen Abweichebene hin zur Hauptebene abgedrängt wird - oder sogar darüber hinaus in eine Schwenkebene. Der Schwenkwinkel zwischen der Hauptebene und der Abweichebene beträgt selbst in engen, schnell durchfahrenen Kurven jeweils vielleicht nur 1° oder 2° (bei hohen Rotationsfrequenzen der Sektormassen sowie bei Aufteilung der Schwundmassen in eine besonders hohe Anzahl von Sektormassen oft sogar noch erheblich weniger als 1°), weil die Korrigierstöße die rotierenden Sektormassen laufend wieder in etwa in die Hauptebene zurückdrängen - obwohl bei Kurvenfahrten die Schwungmassen während ihrer sehr schnellen Rotation wegen ihres Trägheitsmomentes, also wegen ihres Beharrungsvermögens, laufend wieder etwas aus ihrer Rotationsebene herausgedrängt werden.

Weil die Schwungmasse in einzelne, seitlich schwenkbare Sektormassen aufgeteilt ist, übt die erfindungsgemäß gestaltete Schwungmasse zwar die gewünschte Antikippkraft auf das Fahrzeug aus. Weil aber diese rotierenden Sektormassen, abgesehen von den Auswirkungen der Korrigierstöße, zeitweise - nämlich während ihrer Bewegung vom unteren Umlaufpunkt UU zum oberen OU sowie während ihrer Bewegung vom oberen Umlaufpunkt OU zum unteren UU - aus der Hauptebene heraus jeweils in eine Abweichebene hinein weiterrotieren, bleibt das Fahrzeug, wie Versuche bestätigten, weiterhin nahezu so leicht lenkbar, als ob keine Antikippvorrichtung angebracht wäre - im Gegensatz zu Fahrzeugen mit konventionellen Antikippvorrichtungen, die starre, aus einem einzigen Block bestehende Schwungmassen enthalten. Besonders wenn bei der Erfindung alle Sektormassen, und nicht nur einzelne, auf der Hauptachse z seitlich schwenkbar sind, wirkt nämlich im wesentlichen nur die Masse der Hauptachsenwelle z - zusammen mit den Befestigungen (z.B. Gelenken) der Sektormassen an der Hauptachsenwelle - als starrer, mit dem Stand der Technik vergleichbarer Rotationskörper, der bei der Erfindung aber ein vergleichsweise nur kleines eigenes Trägheitsmoment besitzt.

Beispiele für die Erzeugung der Korrigierstöße mittels Ablenkelementen zeigen die Fig. 4 und 5. Bei diesen Weiterbildungen der Erfindung sind am nichtrotierenden Stator ST jeweils angenähert im oberen Umlaufpunkt OU Elektromagnetpaare EM als Ablenkelemente angebracht, also jeweils ein Elektromagnet links und einer rechts von den zwischen ihnen hindurchrotierenden Sektormassen. Außerdem weisen die Sektormassen zumindest dort ferromagnetische Bereiche auf - also weichmagnetische Bereiche N-S, wo sie durch den Spalt zwischen den beiden Elektromagneten EM hindurchrotieren. Diese Elektromagnete EM können, während das Fahrzeug in einer Kurve fährt, im Bereich des oberen Umlaufpunktes OU dosierte Korrigierstöße auf die zwischen ihnen hindurchrotierenden Sektormassen ausüben - sie können nämlich die betreffende Sektormasse magnetisch jeweils mehr oder weniger schwach oder stark beliebig nach links oder rechts hin ziehen, je nach der Stärke der die Magnete jeweils erregenden Stromstöße. Diese Weiterbildung der Erfindung hat u.a. den Vorteil, daß den rotierenden Bauteilen keine elektrischen Spannungen zugeführt werden müssen, nämlich weder zur Erzeugung der Korrigierstöße noch zur Erzeugung der nachher beschriebenen Sensorsignale.

Man kann die genannten weichmagnetischen Bereiche N-S auch durch hartmagnetische Bereiche N-S ersetzen, also durch Dauermagneten N-S ersetzen, vgl. die Fig. 4 und 5. Man erzeugt dann die Korrigierstöße - statt mittels der weichmagnetischen Bereiche N-S - mittels der hartmagnetischen Bereiche N-S der Sektormassen. Auch dann entstehen nämlich Korrigierstöße als anziehende oder abstoßende Kräfte zwischen einerseits den gezeigten Elektromagneten EM und andererseits dem Dauermagneten N-S.

Überdies sind bei diesen gezeigten Weiterbildungen jeweils zwei solche Elektromagnetpaare als Ablenkelemente angebracht: das eine Paar angenähert im oberen Umlaufpunkt OU, das andere angenähert im unteren Umlaufpunkt UU. Auf diese Weise üben beide Elektromagnetpaare EM während Kurvenfahrten angenähert in oberen Umlaufpunkt OU und im unteren Umlaufpunkt UU auf die durch sie hindurchrotierenden Sektormassen dosiert Korrigierstöße aus, welche erzwingen, daß die betreffenden Sektormassen im Wirkungsbereich der betreffenden Elektromagnete nicht mehr in ihrer bisherigen Abweichebene weiterrotieren können, sondern daß sie, je nach Stärke der Korrigierstoßes, eher zur Hauptebene hin - oder völlig zur Hauptebene hin, oder gar zur Schwenkebene hin - umschwenken.

Die Ablenkelemente, hier EM, sind bei der Erfindung jeweils Bestandteile einer Fixiereinrichtung Diese enthält zusätzlich z.B. die in den Fig. 4, 5 und 6 gezeigte elektrische bzw. elektronische Steuereinheit SE. Die dosierte Steuerung der die Korrigierstöße abgebenden Ablenkelemente, hier den Fig. 4 und 5 also der Elektromagnete EM, übernimmt z.B. die in diesen beiden Fig. gezeigte Steuereinheit SE, die ihrerseits von einer Spannungsquelle U mit Energie versorgt wird.

Die Fixiereinrichtung weist zusätzlich einen oder mehrere Rotationsebenensensoren auf, welche ihrerseits den momentanen Winkel zwischen der Abweichebene und der Hauptebene, also die Größe des positiven Winkels ermitteln und an die Steuereinheit SE melden, wodurch die Ablenkelemente mit dementsprechend optimal dosierten Korrigierstößen auf die rotierenden Sektormassen einwirken können. Diese Rotationsebenensensoren rotieren bevorzugt nicht mit den Sektormassen. Sie sind also z.B. am nichtrotierenden Stator ST befestigt und tasten bevorzugt berührungslos die momentanen Positionen von vorbeirotierenden Sektormassen ab. Auch bei dieser Weiterbildung der Erfindung müssen den rotierenden Bauteilen keine elektrischen Spannungen zur Erzeugung der Sensorsignale und damit zur Erzeugung der Korrigierstöße zugeführt werden.

Als Rotationsebenensensoren eignen sich z.B. Lichtschranken mit Lichtquellen LS - z.B. Laserdioden - und Fotoelementen LE, wie schematisch in der Fig. 4 angedeutet ist; diese Lichtschranken sind in der Fig. 4 der Einfachheit halber zwar so gezeichnet, als ob sie ebenfalls in jener Schnittlinie zwischen der Hauptebene und der Abweichebene liegen würden-sie liegen aber besser an ganz anderen Stellen der Rotationsbahn der Sektormassen, an denen nämlich die seitliche Schwenkung der Sektormassen deutlich meßbare Beträge aufweist, also, bezogen auf die Rotationsbewegung dieser Sektormassen, z.B. in etwa um 90° versetzt zwischen den Umlaufpunkten OU und UU.

Auch andere Varianten von Rotationsebenensensoren können zur Messung des momentanen Position der Abweichebene benutzt werden. Man kann z.B. kombinierte Lichtquellen-Fotoelement-Einheiten S in Verbindung mit auf den Sektormassen angebrachten spiegelnden Flächen SP benutzen, vgl. die Fig. 4 und 5. Auch auf diese Weise kann die Steuereinheit SE elektronisch die richtig dosierten Korrigierstöße erzeugen. Wenn man bei dieser Weiterbildung selektiv wirkende Spiegel als spiegelnde Flächen verwendet, die nämlich jeweils Licht nur bestimmter Wellenlängen reflektieren, und wenn man zusätzlich jede Sektormasse mit einem andersartigen derartigen selektiven Spiegel ausstattet, kann man erreichen, daß jede Sektormasse ein anderes Wellenlängenmuster (andere Farben, ein anderes Lichtspektrum) reflektiert; dann kann das zugehörende Fotoelement sogar genau identifizieren, welches der verschiedenen Sektormassen soeben Licht reflektiert - und damit kann ein solcher, das reflektierte Lichtspektrum identifizierender Rotationsebenensensor auch als Drehwinkelsensor dienen, der einzeln für jede Sektormasse feststellen kann, um welchen Drehwinkel sich momentan die betreffende Sektormasse vom ihrem oberen und unteren Umlaufpunkt OU/UU entfernt hat.

Es gibt weitere, berührungslos die momentane Rotationsebene messende Rotationsebenensensoren: Ein in den Sektorenmassen integrierter Permanentmagnet N-S kann in nichtrotierenden abtastenden Sensorspulen Sensorsignale erzeugen, die der Größe des positiven Winkels entsprechen, wobei diese Sensorspulen - ähnlich wie die in den Fig. 4 und 5 gezeigten Spulen der Elektromagnete EM seitlich von den Sektormassen EM am Stator ST befestigt sein können, wiederum aber möglichst nicht in jener Schnittlinie, sondern weitab davon, z.B. auch hier in etwa um 90° versetzt zwischen den Umlaufpunkten OU und UU.

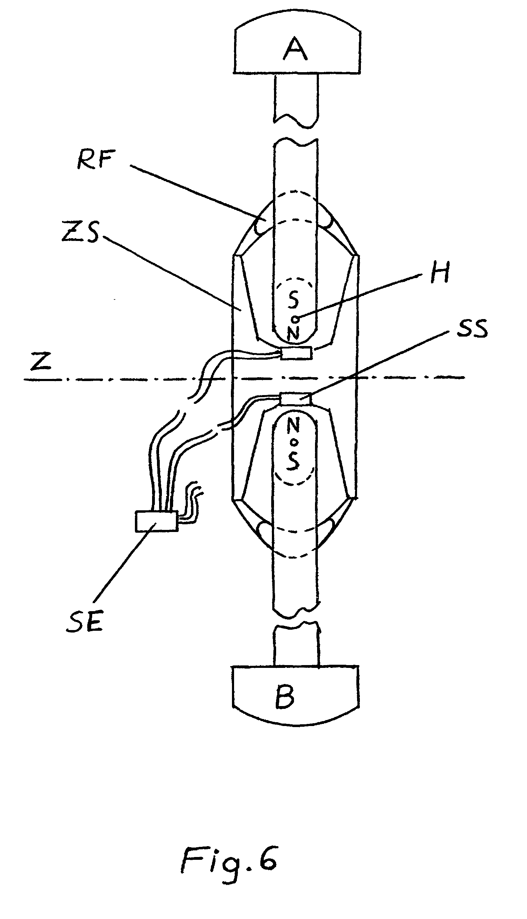

Eine weitere Variante solcher Rotationsebenensensoren zeigt die Fig. 6: Dort ist im Bereich des Gelenkes des Sektormassen im Fuß der Sektormasse jeweils ein Permanentmagnet N-S angebracht, der in den - in der Hauptachse z angebrachten - Sensorspulen SS Signale erzeugt, die dem positiven Winkel zwischen der Abweichebene und der Hauptebene entsprechen. Weil hier die Sensorspulen SS zusammen mit den Sektormassen rotieren, können z.B. Schleifringe auf der Welle der Hauptachse z angebracht werden, um die - hier elektrischen-Sensorsignale der Steuereinheit SE zuzuleiten. Diese Art von Rotationsebenensensor hat den Vorteil, daß zumindest den rotierenden, zeitweise geschwenkten Sektormassen keine elektrischen Spannungen zur Erzeugung der Sensorsignale und damit zur Erzeugung der Korrigierstöße zugeführt werden müssen.

Man kann übrigens die Korrigierstöße statt mit den Elektromagneten EM auch mittels anderer Ablenkelemente-Typen erzeugen: Man kann beispielsweise in jenen Gelenken, die das seitliche Schwenken der Sektormassen ermöglichen, z.B. bei den in den Fig. 2 und 3 angedeuteten Gelenkachsen H, jeweils piezoelektrische oder magnetorestriktive Elemente als Ablenkelemente einfügen, welche während einer Kurvenfahrt - ähnlich wie die Elektromagnetpaare EM - in den oberen und/oder unteren Umlaufpunkten OU/UU kurzzeitig die Schwenkbewegungen der rotierenden Sektormassen blockieren können. Dieses Blockieren erzwingt, daß die betreffende, soeben am Gelenk blockierte Sektormasse vorübergehend nicht mehr weiter in ihrer Abweichebene rotiert, sondern vorübergehend insbesondere in ihrer Hauptebene Man kann dabei die piezoelektrische oder magnetorestriktive Elemente so anbringen, daß den rotierenden Sektormassen keine elektrische Spannung zur Erzeugung der Sensorsignale und damit zur Erzeugung der Korrigierstöße zugeführt werden muß.

Man kann die Korrigierstöße auch mittels Reibung erzeugen, vgl. die Fig. 6: nämlich z.B. mittels zwischen den Sektormassen angebrachten Reibeflächen RF, an welchen die kinetische Energie der seitlichen Schwenkung der Sektormassen aufgezehrt wird, bis diese Sektormassen in etwa in ihrer Hauptebene weiterrotieren - solange sich diese - zusammen mit den Sektormassen rotierenden - Reibeflächen jeweils an die betreffenden Sektormassen anlehnen. Damit diese Weiterbildung das Lenkverhalten des Fahrzeuges möglichst wenig beeinflußt, kann die elektronische Steuerung SE die Reibeflächen während des Rotierens der Sektormassen nur nahe dem oberen und/oder unteren Umlaufpunkt OU/UU anlehnen, aber in den übrigen Rotationsphasen die Reibung vermindern oder unterlassen.

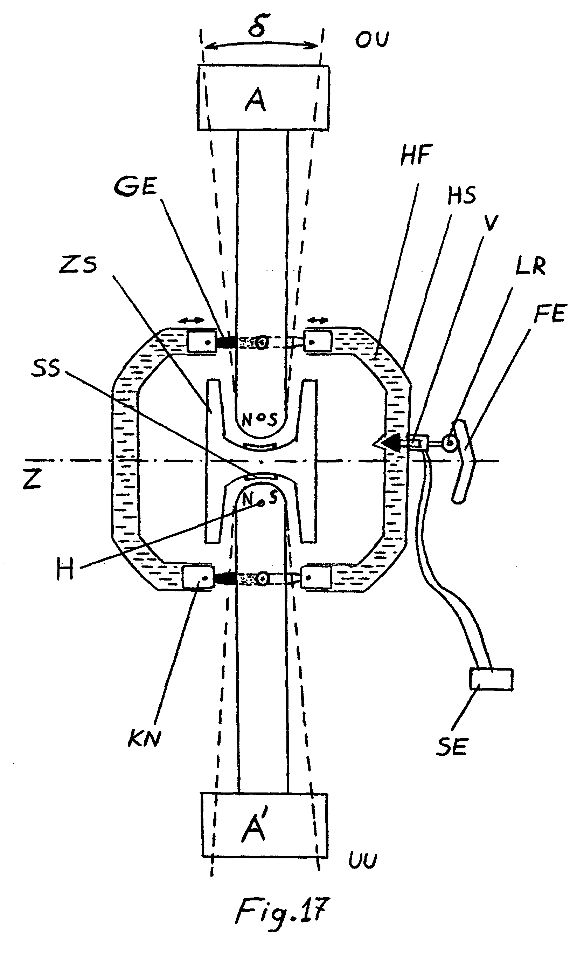

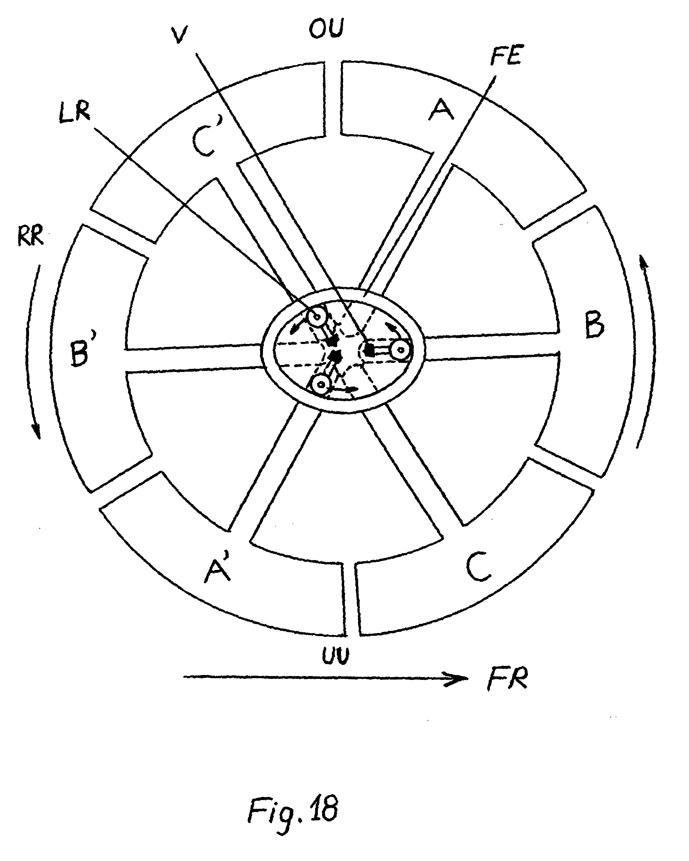

Die Fig. 17 und 18 zeigen eine weitere Variante zur Erzeugung der Korrigierstöße, In diesen Figuren ist beispielhaft angenommen, daß eine geradzahlige Anzahl, nämlich beispielhaft sechs Sektormassen angebracht sind, vgl. die in Fig. 18 gezeigten drei Sektormassen A, B, C sowie jeweils gegenüber die drei weiteren A', B' und C'. Wenn sich also z.B. die Sektormasse A genau im oberen Umlaufpunkt OU befindet, dann befindet sich die gegenüberliegende A' genau im unteren Umlaufpunkt UU. Eine Besonderheit dieser Weiterbildung besteht darin, daß die Fixiereinrichtung hydraulisch wirkende Ablenkelemente enthält, vgl. die Fig. 17, nämlich u.a. ein hydraulisches Rohrsystem HS, dessen hydraulische Füllung HF, ähnlich wie bei Kfz-Bremssystemen, z.B. aus Hydrauliköl besteht.

Je ein eigener Kolben KN pro Sektormasse dient hier jeweils als Wandler. Dieser Wandler KN wird über ein Gestänge GE abhängig davon bewegt, wie stark momentan die betreffende Sektormasse während ihrer momentanen Rotation innerhalb ihres Schwenkbereiches δ seitlich geschwenkt wird. Durch diese Kolbenbewegung hat die hydraulische Füllung HF die Tendenz, im hydraulischen Rohrsystem HS zu fließen, solange die betreffenden Sektormasse in etwa parallel zur Richtung der Hauptachse geschwenkt wird, Dabei können - zur Vereinfachung der Konstruktion und ihrer Betriebsweise - im gezeigten Beispiel insgesamt drei hydraulische Systeme HS angebracht sein, nämlich für jedes aus zwei gegenüberliegenden Sektormassen bestehendes Sektormassenpaar A/A', B/B' und C/C' jeweils ein eigenes hydraulisches System HS, über welches jeweils der Wandler/Kolben KN der ersten Sektormasse eines Sektormassenpaares - z.B. des Paares A/A' jeweils mit dem Wandler/Kolben KN der zweiten, anderen Sektormasse desselben Sektormassenpaares korrespondiert.

Falls keine Korrigierstöße erzeugt würden, dann würden während einer Kurvenfahrt des Fahrzeuges die Sektormassen abseits ihrer Hauptebene, also in einer Abweichebene rotieren. Dann würde die hydraulische Flüssigkeit HF im hydraulischen System HS, angetrieben von den Wandlern/Kolben KN, ständig in etwa parallel zur Hauptachse z, also seitlich hin- und herpendeln, weil die betreffenden Sektormassen während jeder Umdrehung einmal nach links und einmal nach rechts schwenken. Nur im oberen und im unteren Umlaufpunkt OU/UU befinden sich diese Sektormassen jeweils ungeschwenkt ziemlich genau in der oben definierten Schnittlinie zwischen ihrer Hauptebene und Abweichebene, während das Fahrzeug durch eine Kurve fährt.

Zusätzlich ist jedoch bei dieser Weiterbildung der Erfindung je ein eigenes Ventil V - oder mehrere eigene Ventile V - pro hydraulisches System HS angebracht, vgl. die Fig. 17. Dieses Ventil V gestattet, die Pendelbewegungen der hydraulischen Flüssigkeit HF im hydraulischen System HS zu unterbrechen, indem dieses Ventil V den Zufluß und Abfluß der Hydraulischen Flüssigkeit HF, bezogen auf den beweglichen Kolben KN, absperren/unterbrechen/blockieren kann: Dazu wird das Ventil V - ebenso wie die übrigen Ventile V aller insgesamt vorhandenen hydraulischen Systeme HS - jeweils so gesteuert,
- daß das Ventil V dieses Hin- und Herpendeln der hydraulischen Flüssigkeit unterbricht bzw. blockiert, während sich das betreffende Sektormassenpaar - vgl. A/A' in der Fig. 17 - angenähert im oberen und unteren Umlaufpunkt OU/UU befindet
- daß aber dieses Ventil V jeweils das Hin- und Herpendeln mehr oder weniger zuläßt, während sich das betreffende Sektormassenpaar abseits dieser Umlaufpunkte befindet.
Weil die Ventile V dieses Pendeln während Kurvenfahrten jeweils unterdrücken - wegen der geringen Komprimierbarkeit der hydraulischen Flüssigkeit HF -, zwingen diese Ventile V über die Wandler/Kolben KN beide Sektormassen des betreffenden Sektormassenpaares, ab sofort aus ihren oberen und unteren Umlaufpunkten OU/UU heraus in ihre Hauptebene hinein weiterzurotieren, statt in ihre Abweichebene hinein weiterzurotieren. Damit erzeugen die Ventile V über die Wandler/Kolben KN laufend die erfindungsgemäß nötigen Korrigierstöße während jenen Zeitpunkten, in denen sich die Sektormassen jeweils in ihrem oberen oder unteren Umlaufpunkt OU/UU befinden. Damit kann diese Weiterbildung der Erfindung im Prinzip auch ohne Elektromagneten EM auskommen, ebenso ohne Rotationsebenensensoren-selbst die Stärke der Korrigierstöße braucht bei dieser Weiterbildung nicht an den Momentanwert des positiven Abweichwinkels angepaßt zu werden.

Den Zeittakt zur rechtzeitigen Steuerung der Ventile V kann man auf verschiedene Weise erzeugen: Schon oben wurde erwähnt, daß man einen Drehwinkelsensor benutzen kann, der das von den verschiedenen Sektormassen reflektierte, einzeln für jede Sektormasse typischandersartige Lichtspektrum feststellt und damit auch jenen Drehwinkel feststellt, um den die betreffende Sektormasse momentan jeweils noch von ihrem oberen und/oder unteren Umlaufpunkt OU/UU entfernt ist. Man kann jedoch auch beliebige andere Drehwinkelsensoren zur taktrichtigen Steuerung der Ventile V benutzen: Beispielsweise kann man gemäß der Fig. 18 ein - z.B. ovales - Führungselement FE individuell jedem Sektormassenpaar A/A', B/B', C/C' zuordnen, wobei sich dieses Führungselement nicht zusammen mit dem betreffenden Sektormassenpaar um die Hauptachse z herumrotiert - statt dessen kann z.B. die kleine Achse des Ovals FE starr in Richtung vom oberen zum unteren Umlaufpunkt OU-UU orientiert befestigt sein. Geführt durch dieses - hier beispielhaft ovale - Führungselement FE, können sich z.B. drei Laufrollen LR - je eine Laufrolle LR pro Sektormassenpaar - am Führungselement entlangbewegen und so durch ihren variablen Abstand zur Ovalmitte (also z.B. zur Hauptachse z) den Takt zur rechtzeitigen Steuerung der - hier drei - Ventile V dieser erfindungsgemäßen Antikippvorrichtungs-Weiterbildung erzeugen.

Man kann jedoch statt des - der Fig. 18 entsprechenden - ovalen Führungselements FE z.B. auch ein mehr oder weniger dachförmiges Führungselement gemäß Fig. 17 anbringen, das ebenfalls , bezogen auf die Umlaufpunkt OU/UU starr, also nicht mitrotierend, befestigt ist. Als Drehwinkelsensoren LR können dann wieder Laufrollen LR, Laufkugeln LR o.dgl. angebracht werden. Der Abstand des Ventils V von der momentanen Position dieses Drehwinkelsensors LR steuert dann taktgerecht das zugeordnete Ventil V.

Statt mit mechanisch wirkenden Drehwinkelsensoren LR kann auch eine elektronische Steuereinheit SE die Steuerung der Ventile V übernehmen, wobei diese Steuereinheit mit elektronischen Drehwinkelsensoren kooperieren kann, z.B. mit den obengenannten, das Lichtspektrum feststellenden Drehwinkelsensoren.

Bei dem in der Fig. 17 gezeigten Weiterbildungsbeispiel sind übrigens pro Sektormassenpaar jeweils zwei - im Prinzip gleichartig gestaltete - hydraulische Systeme HS mit jeweils eigenen Wandlern KN und eigenen Ventilen V angebracht. Dadurch wird die Erzeugung der Korrigierstöße mittels der gleichzeitig betätigbaren Ventile V noch zuverlässiger, als wenn nur ein einziges hydraulisches System HS pro Sektormassenpaar angebracht wäre: In diesen hydraulischen Systemen HS kann nämlich, während das Ventil V geschlossen ist, jeweils ein Vakuum an einem der beiden Äste des hydraulischen Systems HS entstehen, wobei dieses Vakuum die Zuverlässigkeit des Betriebs dieses hydraulischen Systems beeinträchtigen kann. Wenn hingegen zwei - statt nur ein einziges - hydraulische Systeme HS pro Sektormassenpaare angebracht sind, sind solche Störungen durch Vakuumbildungen entsprechend zuverlässig vermeidbar

Bei dem in den Fig. 17 und 18 beschriebenen Beispiel sind zwar drei hydraulische Systeme HS mit je einem eigenen Ventil V angebracht, nämlich je ein hydraulisches System HS pro Sektormassenpaar A/A', B/B', C/C', das zwei einander gegenüberliegende Sektormassen hydraulisch über Wandler/Kolben KN aneinanderkoppelt. Im Prinzip kann man jedoch das hydraulische System HS auch anders gestalten: Man kann insbesondere einzeln jede Sektormasse über je einen ihr individuell zugeordneten Wandler/Kolben KN mit einem ihr ebenfalls individuell zugeordnetes, eigenes hydraulisches System HS und jeweils eigenen Ventilen V ausstatten - also bei sechs Sektormassen mit sechs individuell zugeordneten hydraulischen Systemen HS/KN/V -, wobei jeder Wandler/Kolben KN dann über das System HS und damit über das eigene Ventil V mit einem (in diesen Figuren nicht gezeigten) Vorratsbehälter für die hydraulische Flüssigkeit HF aneinandergekoppelt ist. Auch dann sind die Ventile V - bei sechs Sektormassen sechs Ventile V - taktgerecht im oberen und/oder unteren Umlaufpunkt OU/UU zu steuern.

Die in den Fig. 4 und 5 dargestellten Weiterbildungen zeichnen sich insbesondere durch eine gewisse Kompaktheit und Robustheit aus. Bei ihnen sind die die Korrigierstöße erzeugenden nicht-mitrotierenden Fixiereinrichtungs-Bestandteile, hier beispielhaft die Ablenkelemente/Elektromagnete EM, jeweils an dem stabilen ruhenden Stator ST angebracht, der in diesem Falle sogar auch die Hauptachsenwelle z und den die Sektormassen antreibenden Elektromotor M trägt.

Die in der Fig. 5 gezeigte Weiterbildung der Erfindung zeigt, wie die ganze Antikippvorrichtung, insbesondere ihr die Hauptachse z tragender Stator ST, über eine massive Ständeranordnung SG fest mit einer stabilen Bodenplatte BP verbunden ist, wobei die Bodenplatte ihrerseits starr im Fahrzeug befestigt werden kann. Die Hauptachse z braucht nämlich nicht in der Ebene der am Fahrzeug befestigten Bodenplatte BP zu rotieren; es genügt, wenn die sie haltenden Lager über massive Anordnungen, z.B. über die gezeigte Ständeranordnung SG, fest mit dem Fahrzeug verbunden werden.

Die Schwungmasse kann - z.B. gemäß den in den Fig. 1 und 5 gezeigten Beispielen - in einer Kapsel K rotieren, um einen gewissen Schutz vor Verletzungen von Personen und Gepäck durch Berührung der rotierenden Sektormassen zu bieten. Diese Kapsel ist zudem bevorzugt evakuiert, um den Luftwiderstand für die rotierenden Sektormassen zu verringern.

Bei einer Weiterbildung der Erfindung ist der Schwenkbereich 8, vgl. die Fig. 4 und 5, um den die Sektormassen seitlich geschwenkt werden können, auf Werte unterhalb von ±5° begrenzt, z.B. auf ±3°, z.B. durch mechanisch wirkende seitliche Anschläge / Führungsschienen FS, vgl. die Fig. 3, oder durch eine entsprechende Gestaltung der zentralen Scheibe ZS, vgl. die Fig. 3 bis 5. Man kann dadurch einen robusten, schlanken Aufbau der Antikippvorrichtung erreichen, vgl die Fig. 5. Falls beim Parken des Fahrzeuges manche der Sektorenmassen seitlich am Rande des Schwenkbereiches ruhen, können sie danach in der Startphase des Fahrzeuges vorübergehend wild innerhalb des Schwenkbereiches hin- und herpendeln; dieses Hin- und Herpendeln hält sich aber in erträglichen Grenzen, wenn eben die Größe dieses Schwenkbereiches δ auf vergleichsweise kleine Werte begrenzt wird. Durch Vermeiden dieses Pendelns während Startphasen - und während des Abstellen des Fahrzeuges - kann auch vermieden werden, daß die Antikippvorrichtung, insbesondere ihre Ablenkelemente - z.B. EM - und/oder ihre Rotationsebensensoren - z.B. S/LS/LE - beschädigt werden. Vgl. auch den Hinweis oben, daß selbst in scharfen, schnell durchfahrenen Kurven bei sinnvoller Dimensionierung der erfindungsgemäßen Antikippvorrichtung in der Regel Abweichwinkel von ca. 1° und sogar deutlich darunter erreicht werden können.

Damit die seitlich schwenkbaren Sektormassen insbesondere während der Startphase des Fahrzeuges zunächst rasch in ihrer Hauptebene - statt wild in anderen Ebenen pendelnd oder an Führungsschienen, vgl. FS in der Fig. 3, schleifend - rotieren, kann man - zumindest vorübergehend - den Abweichwinkel, um den eine Sektormasse aus ihrer Hauptebenenorientierung herausgeschwenkt ist, begrenzen. Dazu kann man z.B. gemäß der Fig. 3 vorübergehend Führungsschienen seitlich an die Sektormassen annähern, bis diese stabil insbesondere in der Hauptebene rotieren. Ein ähnliches Ergebnis wie durch solche Führungsschienen kann man erreichen, wenn nach dem Abschalten der Zündung des Fahrzeugmotors der Abweichwinkel jeder Sektormasse - z.B. mittels zu den betreffenden Zeiten an die Sektormassen angelehnte Führungsschienen FS, Fig. 3 - bei auf waagrechter Fläche aufrecht stehendem Fahrzeug jeweils kleiner als ein maximal zulässiger Abweichwinkel ist.

Bei den in den Fig. 1 und 2 gezeigten Beispielen ist die Schwungmasse in sehr viele einzelne Sektormassen A, B, C, D, ..... aufgeteilt. Es bringt jedoch gewisse Vorteile, wenn die Schwungmasse in nur zwei solche Sektormassen aufgeteilt ist: Auch dann erreicht man bereits die erfindungsgemäß angestrebten zusätzlichen Freiheitsgrade zum Optimieren des Aufbaus und der Betriebsweise der Antikippvorrichtung. Diese Weiterbildung der Erfindung ist sogar besonders wenig aufwendig. Insbesondere kann man dann mit vergleichsweise wenig Aufwand Sensorspulen SS nach Art der Fig. 6 so dicht an der Hauptachse z anbringen, daß das Eigengewicht (Trägkeitsmoment) dieser Spulen zusammen mit dem Eigengewicht (Trägkeitsmoment) der zentralen Scheibe ZS und zusammen mit dem sonstigen Eigengewicht (Trägkeitsmoment) der Welle der Hauptachse z besonders klein gemacht werden kann. Damit kann man erreichen, daß das Lenkverhalten des Fahrzeuges selbst bei sehr hohen Rotationsfrequenzen der Sektormassen - trotz der Aufteilung der Schwungmasse in zwei, für sich jeweils massereiche Sektormassen - besonders wenig von der Antikippvorrichtung beeinflußt wird.

Wenn man die Schwungmasse nach Art der Fig. 2 in weit mehr als zwei Sektormassen aufteilt, muß die Folgefrequenz der Korrigierstöße entsprechend der Anzahl der Sektormassen erhöht werden, wobei dann aber die Kraft der einzelnen, besonders rasch aufeinanderfolgenden Korrigierstöße vergleichsweise klein gemacht werden kann. Wegen der hier besonders hohen Folgefrequenz der Korrigierstöße, und wegen der vergleichsweise geringen Stärke dieser Korrigierstöße, rotiert dann die gesamte Antikippvorrichtung besonders ruhig, d.h. vibrationsarm, was oft sehr erwünscht ist. Insbesondere kann man dann unangenehme Geräuschbildungen besonders leicht vermeiden.

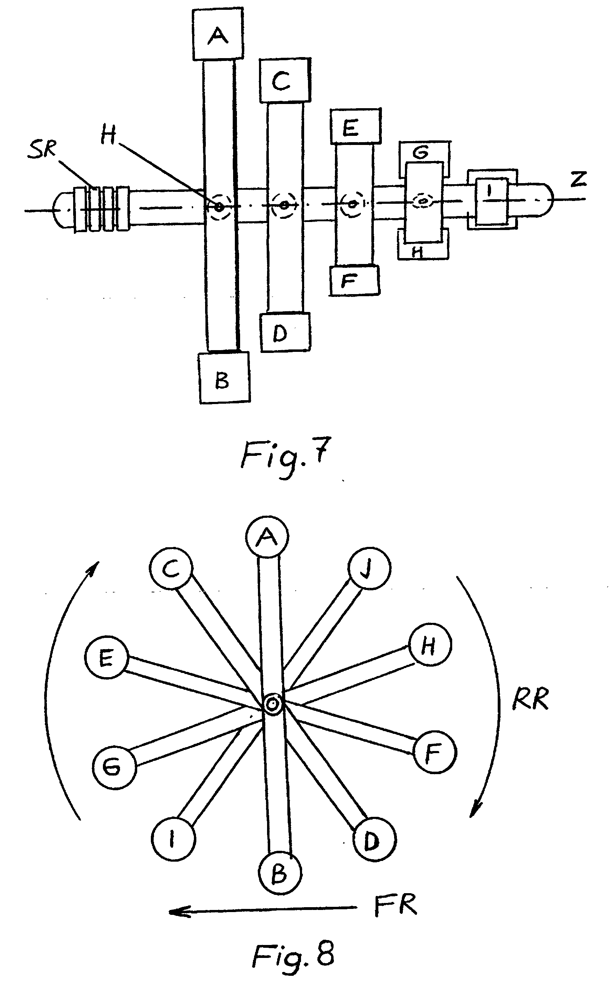

Man kann das vorteilhaft besonders vibrationsarme Laufen der Antikippvorrichtung, die viele Sektormassen enthält, weitgehend vereinen mit dem niedrigen Trägheitsmoment der starr mit der Hauptachse z rotierenden Bauteile und mit der damit im Prinzip erreichbaren besonders geringen Beeinflussung des Lenkverhaltens des Fahrzeuges: Die Fig. 7 und 8 zeigen ein solches Beispiel, wobei die Fig. 8 eine Seitenansicht der in Fig. 7 dargestellten Weiterbildung darstellt. Man kann nämlich mehrere Schwungmassen nebeneinander - hier fünf nebeneinander - auf der gemeinsamen Hauptachse z anbringen, wobei jede einzelne Schwungmasse erfindungsgemäß aufgebaut ist und erfindungsgemäß betrieben wird - wobei also jede dieser (hier fünf) Schwungmassen aus jeweils z.B. nur den zwei, jeweils für sich schwenkbaren Sektormassen A/B, C/D, E/F, ..... besteht, die alle miteinander gleichzeitig und gleichsinnig um die Hauptachse z rotieren, und die bei Kurvenfahrten durch Korrigierstöße jeweils aus ihren Abweichebenen herausgedrängt, nämlich mehr oder weniger hin zu ihrer Hauptebene oder gar darüber hinaus in eine Schwenkebene gedrängt werden. Bei dieser Weiterbildung können die Rotationsebenensensoren wieder als Sensorspulen ähnlich der Fig. 6 ausgebildet werden, wobei die elektrischen Signale z.B. über die in der Fig. 7 gezeigten Schleifringe der Steuereinheit zugeleitet werden können. Diese Weiterbildung kann auch, ähnlich wie in der Fig. 5 gezeigt, in einer evakuierten Kapsel K rotieren und über einen Stator ST und eine Ständeranordnung SG mit dem Fahrzeug verbunden werden.

Je nach der jeweiligen Stärke der Antikippkraft der Erfindung wird das Fahrzeug auf ebener Straße in einer Linkskurve (Rechtskurve)
- bei schwacher Antikippkraft sich weiterhin mehr oder weniger zur Kurvenaußenseite, also nach rechts (links) neigen, wenn auch schwächer neigen als wenn die Erfindung im Fahrzeug nicht angebracht wäre,
- bei mittelstarker Antikippkraft ungekippt völlig senkrecht bleiben,
- und bei sehr starker Antikippkraft sich sogar zur Kurveninnenseite, also nach links (rechts) neigen - in diesem Falle wird die Kipptendenz des Fahrzeuges überkompensiert, denn es verhält sich so, als ob - falls keine Antikippvorrichtung angebracht wäre - sein Schwerpunkt tiefer als die Fahrbahnebene liegen würde statt oberhalb der Fahrbahnebene; dann verhält sich das Fahrzeug ähnlich nach innen geneigt wie viele schnelle Motorräder in Kurven.

Wie hoch die auf das Fahrzeug wirkende Antikippkraft in Realität dann jeweils ist - ob sie schwach oder mittelstark oder sehr stark ist -, ist an sich völlig frei wählbar entsprechend dem angestrebten, als angenehm empfundenen Kippverhalten Die Stärke der Antikippkraft in einem Fahrzeug wird nämlich - abgesehen von den konstruktiven Details wie vom Trägheitsmoment der Sektormassen - erfindungsgemäß weitgehend durch zwei weitgehend frei wählbare Betriebsparameter festgelegt: nämlich einerseits durch die Rotationsfrequenz der Sektormassen sowie andererseits durch die jeweilige Stärke der Korrigierstöße, welche festlegt, ob die betreffende Sektormasse nach diesem Stoß zunächst für eine kurze Zeit während der Kurvenfahrt mehr oder weniger in der Hauptebene, oder in einer Ebene zwischen der Hauptebene und der bisherigen Abweichebene oder in der oben definierten Schwenkebene weiterrotiert.

Zunächst sei der Einfluß der Stärke der Korrigierstöße auf die senkrecht zur Fahrbahn gerichtete Antikippkraft betrachtet. Die Stärke der Korrigierstöße beeinflußt vor allem die Lage jener Ebene, in der die Sektormassen unmittelbar nach dem Korrigierstoß für eine kurze Zeit rotieren. Diese Rotationsebene beeinflußt ihrerseits vor allem die Gleichmäßigkeit des Antikippverhaltens der Antikippvorrichtung:

Um in Extremfällen - vor allem bei mehrfach abrupt aufeinanderfolgenden Ausweichmanövern - den Fahrer weitgehend vor irritierenden ungewohnten Kipptendenzen des Fahrzeuges zu verschonen, um dann also ein weitgehend gewohntes *gleichmäßiges* Kippverhalten des Fahrzeuges zu erreichen (entweder *stets* in gewohntem Ausmaß geneigt zur Kurveninnenseite hin, oder *stets* in gewohntem Ausmaß geneigt zur Kurvenaußenseite hin, oder *stets* weitgehend ungeneigt, d.h. in weitgehend senkrechter Ausrichtung zur Fahrbahn), kann man die Stärke der Korrigierstöße in der Regel in etwa so wählen, daß die Korrigierstöße die Sektormassen zwingen, zunächst möglichst genau in ihrer Hauptebene weiterzurotieren - damit sie also nach dem Korrigierstoß, jedenfalls zunächst, ziemlich genau in der Mitte ihres maximalen Schwenkbereiches δ weiterrotieren. Dies gilt insbesondere dann, wenn die Steuereinheit SE die Stärke der Korrigierstöße alleine - oder weitgehend - davon abhängig macht, welche Sensorsignale ihr die Rotationsebenensensoren liefern:
- Wenn nämlich in einer Linkskurve (Rechtskurve) die Stärke der Korrigierstöße nur so schwach ist, daß die betreffende Sektormasse nach diesem Korrigierstoß zunächst in einer Ebene zwischen ihrer bisherigen Abweichebene und der Hauptebene weiterrotiert, dann kann es mitunter in den Fahrer irritierender Weise zu ihm ungewohnten Kipptendenzen des Fahrzeuges kommen - insbesondere bei einem abrupten Wechsel von einer engen Linkskurve (Rechtskurve) hin zur Geradeausfahrt, oder gar bei einem abrupten Übergang von der Linkskurve (Rechtskurve) in eine Rechtskurve (Linkskurve) -, insbesondere weil dann während des Fahrtrichtungswechsels die Sektormasse jeweils zunächst die Tendenz hat, sofort in der Hauptebene statt weiterhin mehr in Richtung einer Abweichebene weiterzurotieren.
- In ahnlicher Weise kann es dann, wenn bei einem Ausweichmanöver während einer Linkskurve (Rechtskurve) die Korrigierstöße so stark sind, daß die betreffende Sektormasse nach diesem Korrigierstoß zunächst in einer Schwenkebene weiterrotiert, insbesondere nach einem abrupten Wechsel hin zu noch stärkerem Einbiegen nach links (rechts), also abrupt mit noch stärkerem Lenkeinschlag, mitunter ebenfalls zu den Fahrer irritierenden ungewohnten Kipptendenzen des Fahrzeuges kommen.

Während die Rotationsebene vor allem die Gleichmäßigkeit des Antikippverhaltens beeinflußt, beeinflußt die Höhe der Rotationsfrequenz erheblich die Stärke der senkrecht zur Fahrbahn gerichteten Antikippkraft. Je nach der Höhe dieser Frequenz erreicht man also die schwache oder die mittelstarke oder die sehr starke Antikippkraft und damit das entsprechende Antikippverhalten. Weil die auf das Fahrzeug wirkende Zentrifugalkraft, welche die Kipptendenz in einer Kurve auslöst, mit steigender Fahrzeuggeschwindigkeit zunimmt, kann man bei Bedarf die Rotationsfrequenz mit steigender Fahrgeschwindigkeit auch steigern. Versuche zeigten, daß es aber - zumindest häufig - genügt, eine Rotationsfrequenz konstant zu lassen und nur die Stärke der Korrigierstöße an den jeweiligen positiven Abweichwinkel anzupassen, weil für sich bereits diese passend dosierte, variable Stärke der Korrigierstöße zumindest weitgehend unnötig macht, zusätzlich die Rotationsfrequenz zu verändern.

Um ein - von den Fahrern häufig bevorzugtes - möglichst gleichmäßiges Kippverhalten des Fahrzeuges in allen Fahrgeschwindigkeiten auch bei abrupten mehrfachen Ausweichmanövern zu erreichen, ist daher häufig vorzuziehen, die Stärke der Korrigierstöße so zu wählen, daß die Sektorenmassen nach jedem Stoß zunächst mehr oder weniger in ihrer Hauptebene weiterrotieren, wobei aber die Frequenz der Rotation der Sektormassen mit steigender Fahrzeuggeschwindigkeit bei Bedarf sich ändern mag, insbesondere zunehmen mag, z.B. um bei besonders hohen Fahrzeuggeschwindigkeiten eine vergrößerte Kippneigung des Fahrzeugs hin zur Kurveninnenseite zu erreichen.

Bei einer Weiterbildung der Erfindung erzeugt die Steuereinheit SE die der Fahrgeschwindigkeit und dem Kurvenradius angepaßte Antikippkraft nicht - oder nicht alleine-mittels der Rotationsebenensensoren, sondern mittels eines Fahrzeugverhaltensensors, der die auf das Fahrzeug während einer Kurvenfahrt wirkende Zentrifugalkraft mißt und/oder direkt den momentanen Kippwinkel mißt, um den sich das Fahrzeug momentan zur Seite neigt. In diesem Falle ist dann die Rotationsfrequenz der Sektormassen und/oder die Stärke der Korrigierstöße abhängig von der Größe der gemessenen Zentrifugalkraft und/oder des gemessenen Kippwinkels.

Bei einer anderen Weiterbildung der Erfindung kann der Fahrzeugfahrer individuell nach seinem momentanen Wünschen die Antikippkraft der Antikippvorrichtung - schwach oder mittelstark oder sehr stark - und damit das Antikippverhalten seines Fahrzeuges zumindest innerhalb eines Toleranzbereiches beliebig modifizieren. Dazu weist das mit der erfindungsgemaßen Antikippvorrichtung ausgestattete Fahrzeug ein durch den Fahrzeugfahrer voreinstellbares Steuerelement auf - z.B. einen Schalter oder einen kontinuierlich einstellbaren Schieber -, das die Rotationsfrequenz der Sektormassen und/oder die Stärke der Korrigierstöße individuell nach den momentanen Wünschen des Fahrzeugfahrers modifiziert.

Die Steuereinheit SE kann so konzipiert sein, daß die Antikippvorrichtung erst dann aktiviert wird, wenn das Fahrzeug eine kritische Geschwindigkeit überschreitet, wobei die Antikippkraft auch automatisch der Fahrgeschwindigkeit angepaßt werden kann.

Fahrzeuge, in denen eine erfindungsgemäße Antikippvorrichtung eingebaut ist, sollten eine gute Reifenhaftung haben, also auch gute Reifen. Ein zu unerfahrener Fahrer des Fahrzeuges kann nämlich durch die Antikippkraft zu übergroßem Leichtsinn verführt werden, wenn für ihn die in scharfen Kurven sonst auftretende starke Kipptendenz zur Kurvenaußenseite hin ausbleibt.

Bei einer Weiterbildung ist die erfindungsgemäße Antikippvorrichtung in den Motor des Fahrzeuges integriert. Insbesondere kann es sich dabei um einen "links drehenden" Motor handeln, dessen Kurbelwellenachse quer zur Fahrtrichtung orientiert ist und im Betrieb eine Drehrichtung entgegen der Drehrichtung der Fahrzeugräder aufweist - wodurch diese Kurbelwelle die Antikippkraft der erfindungsgemäßen Antikippvorrichtung weiter verstärkt. Günstig ist es, wenn dann zwischen der Kurbelwelle und der Hauptwelle z der erfindungsgemäßen Antikippvorrichtung eine Kupplung - evtl. auch ein Getriebe - eingefügt ist, damit sich nach dem Schalten des Fahrzeuggetriebes in andere Gänge, nicht gleichzeitig die Rotationsfrequenz der Sektormassen der Antikippvorrichtung abrupt mitändert.

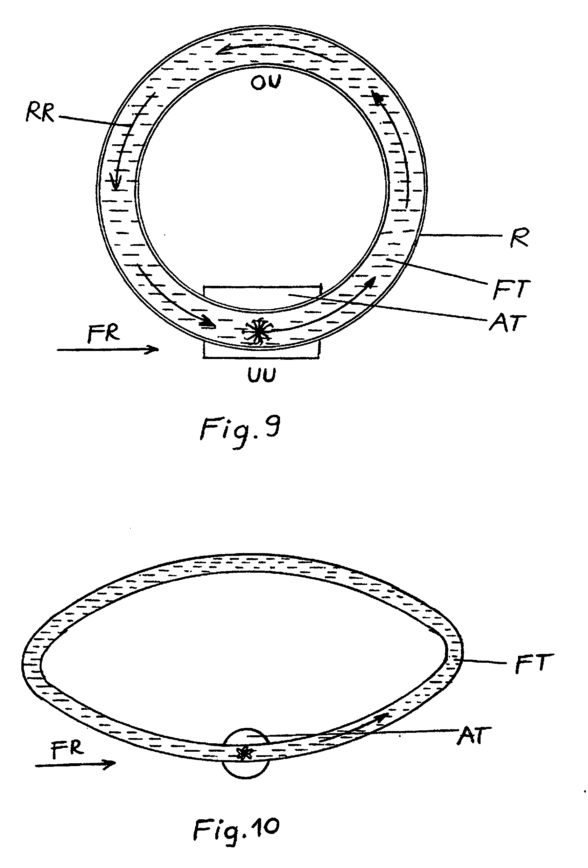

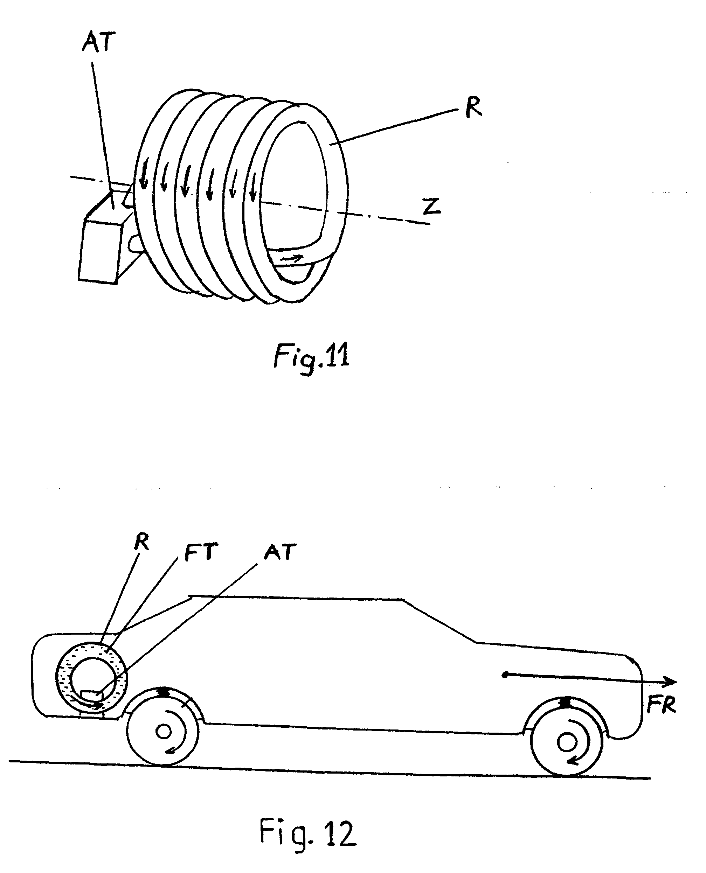

Bei einer anderen Weiterbildung der Erfindung, vgl. die Fig. 9, wird die rotierende Schwungmasse durch eine Flüssigkeit FT gebildet, die in einem mehr oder weniger verformbaren, in sich z.B. kreisförmig angeordneten Rohr R als Flüssigkeitsstrahl herumrotiert. Das Rohr kann während der Kurvenfahrten insbesondere durch die eigenen Trägheitskräfte der rotierenden Flüssigkeit verformt werden, weil es z.B. teilweise aus Gummi oder nachgiebigem Kunststoff besteht. Das Rohr R kann auch mehrere Windungen aufweisen, vgl. die Fig. 11. Das Rohr wird im Fahrzeug so angebracht, daß die Flüssigkeit im Betrieb um eine Hauptachse z rotiert, die ihrerseits - bezogen auf eine ebene waagrechte Fahrbahn bei Geradeausfahrt-zumindest angenähert quer zur Fahrtrichtung sowie im wesentlichen waagrecht gelagert ist, vgl. die Fig. 12. Die Flüssigkeit FT rotiert dabei - quer zur Fahrtrichtung FR von links her auf das Fahrzeug gesehen - im Uhrzeigersinn um die Hauptachse. Diese Hauptachse liegt damit mehr oder weniger im Schwerpunkt des rotierenden Strahles, jedenfalls innerhalb der Umlaufbahn der Flüssigkeit. Der Flüssigkeitsstrahl wird im Betrieb durch eine Antriebseinheit AT angetrieben, z.B. durch eine Turbine AT.

Dieses Rohr R ist im Betrieb so am Fahrzeug befestigt, daß - wegen der Verformbarkeit des Rohres R im Betrieb - die durch das Rohr rotierende Flüssigkeit
- bei Geradeausfahrt auf ebener Fahrbahn die Tendenz hat, in einer senkrecht zur Hauptachse liegenden Hauptebene zu rotieren,
- aber in einer Kurve die Tendenz, angetrieben durch die Trägheitskräfte der Flüssigkeit, in einer Abweichebene zu rotieren, die ihrerseits einen endlichen Winkel - genannt positiver Abweichwinkel - zur Hauptebene aufweist.

Weil die Flüssigkeitsmoleküle innerhalb des rotierenden Flüssigkeitsstrahles gegeneinander beweglich sind und dadurch die Flußrichtung dieses Strahles seitlich - mehr oder weniger parallel zur Hauptachse z des rotierenden Strahles - ablenkbar ist, ist auch bei dieser Weiterbildung der Erfindung die Schwungmasse in - hier fast unendlich viele, gegeneinander bewegliche - Sektormassen aufgeteilt.

Mit anderen Worten: Bei dieser Weiterbildung ist ein nichtrotierendes, ringförmig in sich geschlossenes - z B. zu einem Kreis gebogenes oder ovalähnlich gebogenes oder ein mehrere Windung aufweisendes - Rohr R als hohles Gefäß angebracht. Das Rohr ist mit einer Flüssigkeit gefüllt, deren Moleküle die gegeneinander beweglichen Sektormassen bilden, wobei diese Flüssigkeit - im Betrieb von einer Antriebseinheit angetrieben - im Rohr rings um die Hauptachse schnell so herumrotiert, daß diese Flüssigkeit - quer zur Fahrtrichtung von links her auf das Fahrzeug gesehen - im Uhrzeigersinn rotiert.

Dabei enthält das Rohr mindestens einen einzigen, mit dem Fahrzeug zu verbindenden starren Rohrabschnitt - nämlich zumindest angenähert im oberen Umlaufpunkt, vgl. OU in der Fig. 9, und/oder im unteren Umlaufpunkt UU der im Betrieb herumrotierenden Flüssigkeit -, indem dort das Rohr z.B. einen metallischen starren Rohrabschnitt enthält oder dort lokal starr in einer Halterung befestigt ist. Die Achse dieses starren Rohrabschnittes - und damit die dortige Flußrichtung der herumrotierenden Flüssigkeit - ist zumindest angenähert parallel zur Fahrtrichtung orientiert.

Das Rohr enthält zudem zumindest an solchen Rohrsektoren, in denen die Flüssigkeit mehr oder weniger senkrecht zur Fahrtrichtung fließt, einen oder mehrere, mehr oder weniger parallel zur Hauptachse schwenkbare Rohrsektoren - z.B. hergestellt aus nachgiebigem Gummischlauch oder Kunststoffschlauch, oder z.B. zwar hergestellt aus starrem (Metall-) Rohr, das aber seinerseits mit dem starren Rohrabschnitt OU/UU über einen weich nachgebenden Rohrbereich z.B. aus Gummi oder Kunststoff verbunden ist. Diese schwenkbaren Rohrsektoren können demnach, veranlaßt durch die Trägheitskräfte der herumrotierenden Flüssigkeitsmoleküle, mehr oder aus der Hauptebene heraus hin zur Abweichebene schwenken, wodurch die Flüssigkeit innerhalb dieser Rohrsektoren mehr oder weniger *in der Abweichebene* herumrotieren kann. Sobald aber die herumrotierende Flüssigkeit sich jenem starren Rohrabschnitt OU und/oder UU nähert und diesen durchfließt, wird dieser Flüssigkeit dort lokal jeweils eine Flußrichtung *wieder zurück in die Hauptebene* aufgezwungen. Dadurch stellt dieser starre Rohrabschnitt einen Bestandteil der Fixiereinrichtung dar, nämlich ein Ablenkelement, das die herumrotierende Flüssigkeit aus der Abweichebene heraus und in die Hauptebene hinein lenkt. Hierbei erzeugt dieser Rohrabschnitt OU und/oder UU selber die Korrigierstöße - i.allg. sogar automatisch -, d h. ohne zusätzliche Ablenkelemente oder Rotationsebenensensoren zu benötigen.

Diese mit einer Flüssigkeit als Sektormassen ausgestattete Weiterbildung kann, dem jeweiligen Bedarf entsprechend, auch unterschiedlich starke Antikippkräfte erzeugen, nämlich insbesondere mittels einer bedarfsentsprechenden Regelung der Rotationsfrequenz der Flüssigkeit, also von deren Strömungsgeschwindigkeit. Insbesondere kann man die Antriebseinheit-z.B. die Pumpe oder Turbine AT - dem Bedarf entsprechend unterschiedlich schnell pumpen lassen, insbesondere um diese Strömungsgeschwindigkeit der momentanen Fahrgeschwindigkeit des Fahrzeuges anzupassen - die Antriebseinheit, welche die Rotationsfrequenz der Flüssigkeit steuert, stellt also bei dieser Weiterbildung der Erfindung einen Bestandteil der Fixiereinrichtung dar

Man kann diese Rotationsfrequenz der Flüssigkeit auch mittels eines Fahrzeugverhaltensensors anpassen an die momentane Zentrifugalbeschleunigung und/oder an den momentanen Kippwinkel des Fahrzeuges, so daß dieser Sensor dann ein weiterer Bestandteil der Fixiereinrichtung ist. Die Antikippkraft dieser Weiterbildung kann auch die Kipptendenz des Fahrzeuges überkompensieren, indem die Antikippkraft, z.B. durch besonders hohe Rotationsgeschwindigkeit, so stark erhöht ist, daß sich das Fahrzeug bei Kurvenfahrten, insbesondere bei Ausweichmanövern, zur Kurveninnenseite hin neigt, also so verhält als ob - falls keine Antikippvorrichtung angebracht wäre - sein Schwerpunkt tiefer als die Fahrbahnebene wäre statt oberhalb der Fahrbahnebene. Man kann diese Weiterbildung im Fahrzeug auch doppelt in der Weise anbringen, daß die eine Antikippvorrichtung nahe der linken Fahrzeugseitenwand und die andere nahe der rechten Fahrzeugseitenwand, insbesondere um viel freien Fahrzeuginnenraum insbesondere für Personen, Gepäck und Fracht zu gewinnen. Man kann vor allem auch ein durch den Fahrzeugfahrer voreinstellbares Steuerelement, z.B. einen Schalter oder kontinuierlich einstellbaren Schieber, anbringen, der die Rotationsfrequenz der Flüssigkeit und damit die Kipptendenz des Fahrzeuges individuell nach den momentanen Wünschen des Fahrzeugfahrers modifiziert. Im Prinzip kann man sogar bei dieser Weiterbildung den starren Rohrabschnitt auch für sich schwenkbar im Fahrzeug anbringen - statt ihn völlig unbeweglich im Fahrzeug anzubringen -, z.B. um damit Korrigierstöße zu erreichen, welche die Flüssigkeit zwingen, zunächst in der Schwenkebene statt in der Hauptebene weiterzurotieren.

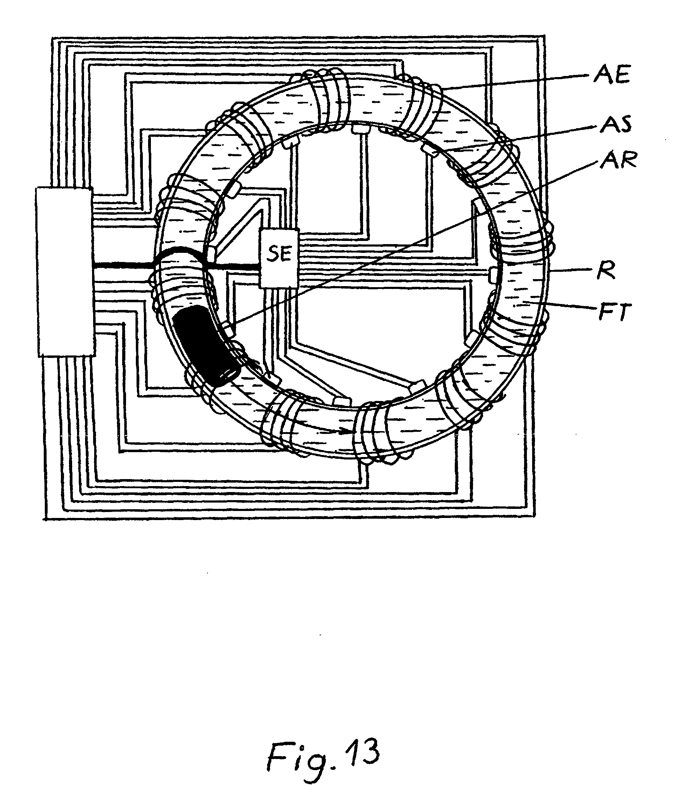

Als Antriebseinheit AT, vgl. die Fig. 9, kann man nicht nur normale Pumpen oder Turbinen einsetzen. Man kann auch, vgl. die Fig. 13, z.B. zwei Maßnahmen treffen:
- Man kann erstens im Rohr R einen - oder gleich mehrere - ferromagnetische, an den Querschnitt des nicht-ferromagnetischen Rohres R angepaßte Antriebskörper AR anbringen; diese Antriebskörper AR sollen entlang der Rohrachse im Rohr R mit der Flüssigkeit FT herumrotieren und damit die Flüssigkeit antreiben.
- Man kann zweitens diese Antriebskörper AR im Laufe ihrer Rotation der Reihe nach magnetisch über die Antriebsspulen AE antreiben, die ihrerseits durch die Steuereinheit SE durch entsprechend getaktete Impulse gesteuert sind.

Dieser Antriebskörper AR kann hierbei, wie in der Fig. 13 gezeigt, jeweils zylindrisch gestaltet sind, aber z.B. auch eine Kugel darstellen oder sonstwie an den Innenraum des Rohres angepaßt sein. Es erweist sich als günstig, wenn das spezifische Gewicht dieses ferromagnetischen - weichmagnetischen oder hartmagnetischen - Antriebskörpers in etwa gleich ist dem spezifischen Gewicht der Flüssigkeit FT, schon um keine Unwucht beim Rotieren der Flüssigkeit zu erzeugen. Daher kann man z.B. auch Hohlkörper als Antriebskörper AR benutzen, um die spezifischen Gewichte anzugleichen. Um insbesondere beim Starten des Fahrzeuges sofort zuverlässig eine kräftige Rotation des Antriebskörpers AR in der richtigen Rotationsrichtung RR, vgl. die Fig. 9, zu erhalten, kann man - insbesondere zwischen den einzelnen Antriebsspulen AE - Antriebssensoren AS anbringen, vgl. die Fig. 13, wobei der Antriebskörper AR hartmagnetische Bestandteile aufweisen soll; die Signale dieser Antriebssensoren AS erleichtern der Steuereinheit SE, nicht nur die Rotationsrichtung des Antriebskörpers AR zu überwachen, sondern auch die Rotation des durch die Antriebsspulen AE erzeugten magnetischen Drehfeldes anzupassen an die jeweilige Position des Antriebskörpers.

Um die räumliche Ausdehnung dieser Weiterbildung der Erfindung klein zu machen, kann man hohe Rotationsgeschwindigkeiten der Flüssigkeit, eine große Flüssigkeitsmenge sowie Rohre R mit großem Rohrquerschnitt wählen. Man kann auch Flüssigkeiten mit großem spezifischen Gewicht wählen.

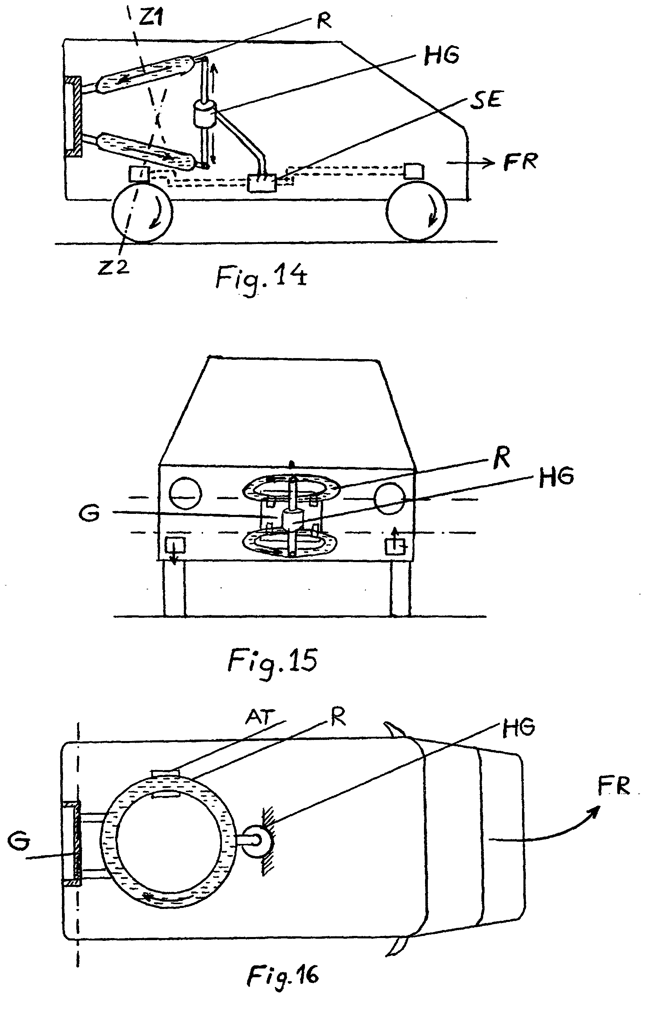

Überraschenderweise zeigte sich, daß es eine nicht völlig der ursprünglichen Absicht entsprechende besondere Anwendung der Erfindung und ihrer verschiedenen Weiterbildungen gibt. Auch diese Anwendung kann nämlich Antikippkräfte erzeugen. Diese besondere Anwendung wird beispielhaft in den Fig. 14 bis 16 gezeigt, wobei hier zur Vereinfachung dieser Figuren davon ausgegangen wird, daß erfindungsgemäß aufgebaute Antikippvorrichtungen gemäß den Fig. 9 bis 13 benutzt sind.

Bei dieser besonderen Anwendung ist die erfindungsgemäße Antikippvorrichtung doppelt vorhanden. Ihre beiden, die Sektormassen aufweisenden Schwungmassen rotieren im Betrieb schnell im gegenläufigen Sinne. Ihre Schwungmassen sind - in der Regel leicht schräg - so übereinander angeordnet, daß deren beide Hauptachsen z1 und z2 zwar mehr oder weniger senkrecht statt waagrecht zur Fahrbahn orientiert sind und mehr oder weniger fluchten, daß aber diese beiden Hauptachsen gegeneinander schwenkbar sind
- indem nämlich mindestens eine der beiden erfindungsgemäßen Antikippvorrichtungen auf der einen Seite mittels eines - mindestens ein Gelenk aufweisenden - Gerüstes G schwenkbar angebracht ist,
- und indem mindestens diese eine der beiden erfindungsgemäßen Antikippvorrichtungen auf der anderen Seite abwechselnd hebbar und senkbar ist - in den Fig. 14 bis 16 sind beide Antikippvorrichtungen hebbar und senkbar, nämlich mittels einer - von einer der beiden Steuereinheiten oder von beiden Steuereinheiten oder von einer gemeinsamen Steuereinheit beider Antikippvorrichtungen gesteuerten - Hebevorrichtung HG mehr oder weniger senkrecht zur Fahrbahn hebbar und senkbar ist, wodurch beide Antikippvorrichtungen gegeneinander schwenkbar sind.
Dabei steuert ein - die Kippneigung des Fahrzeuges und/oder dessen Zentrifugalbeschleunigung messender - Fahrzeugverhaltensensor eine der Steuereinheiten oder beide Steuereinheiten so, daß diese betreffende Steuereinheit den durch die Hebevorrichtung HG erzeugten Winkel zwischen den Richtungen der beiden Hauptachsen z1 und z2 entsprechend der momentanen Kurvensituation einstellt.

### LISTE DER HINWEISZEICHEN

- A, B, C, D, E: Sektormassen
- A', B', C': Sektormassen
- AE: Antriebsspule
- AR: Antriebskörper
- AS: Antriebssensor
- AT: Antriebseinheit
- BP: Bodenplatte
- δ: Schwenkbereich
- EM: Elektromagnet
- FE: Führungselement (Ovalring)
- FR: Fahrtrichtung
- FS: Führungsschiene
- FT: Flüssigkeit
- G: Gerüst
- GE: Gestänge
- H: Gelenkachse
- HF: Hydraulische Füllung (Öl)
- HG: Hebevorrichtung
- HS: Hydraulisches System
- K: (evakuierte) Kapsel
- KN: Wandler, Kolben
- LE: Fotoelement
- LS: Lichtquelle
- LR: Drehwinkelsensor, Laufrolle
- M: Motor
- N-S: (magnetisierter) Bereich
- OU: oberer Umlaufpunkt
- R: Rohr
- RF: Reibeflächen
- RR: Rotationsrichtung
- S: (Lichtquellen-Fotoelement-) Einheiten
- SE: Steuereinheit
- SG: Ständeranordnung
- SP: Spiegel
- SR: Schleifringe
- SS: Sensorspule
- ST: Stator
- UU: unterer Umlaufpunkt
- V: Ventil
- z, z1, z2: Hauptachsen
- ZS: zentrale Scheibe

## Patentansprüche

1. Antikippvorrichtung,
- welche im Betrieb die Umkippgefahr während Kurvenfahrten eines Fahrzeuges, insbesondere bei Ausweichmanövern, abbaut oder beseitigt,
- welche eine Schwungmasse (A, B, C, ...) enthält, die im Betrieb im Regelfall um eine Hauptachse (z) schnell rotiert, die ihrerseits zumindest angenähert quer zur Fahrtrichtung und - bezogen auf eine ebene waagrechte Fahrbahn - im wesentlichen waagrecht gelagert ist, wobei die Schwungmasse - quer zur Fahrtrichtung von links her auf das Fahrzeug gesehen - im Uhrzeigersinn rotiert,
- bei welcher der Schwerpunkt der rotierenden Schwungmasse zumindest angenähert in der Hauptachse liegt,
**dadurch gekennzeichnet,**
- **daß** die Schwungmasse entlang ihres Umfanges in mindestens zwei gegeneinander bewegliche Sektormassen (A,B,C, ..., Fig. 2) aufgeteilt ist,
- **daß** nämlich jede Sektormasse jeweils einzeln um ihre Befestigung (H, Fig. 3) an der Hauptachse parallel oder weitgehend parallel zur Richtung der Hauptachse so schwenkbar ist, daß die betreffende Sektormasse im Betrieb auf ebener Fahrbahn
• bei Geradeausfahrt die Tendenz hat, in einer senkrecht zur Hauptachse liegenden Hauptebene zu rotieren,
• aber in einer Kurve die Tendenz, angetrieben durch Trägheitskräfte, in einer Abweichebene zu rotieren, die ihrerseits einen endlichen Winkel - genannt positiver Abweichwinkel - zur Hauptebene aufweist, so daß sich die Hauptebene und die Abweichebene in einer Schnittlinie (OU/UU, Fig. 2) schneiden, die senkrecht zur Hauptachse sowie - jedenfalls angenähert - senkrecht zur momentanen Fahrtrichtung (FR) verläuft,
- **daß** eine Fixiereinrichtung (SE, EM, LS/LE, S, Fig. 4) angebracht ist, die zumindest während Kurvenfahrten mittels eines oder mehrerer Ablenkelemente (EM) einen kurzen Korrigierstoß auf zumindest eine der Sektormassen ausübt, sobald der Schwerpunkt dieser Sektormasse während ihres Rotierens um die Hauptachse sich zumindest angenähert im oberen (OU) oder unteren Umlaufpunkt (UU) befindet - also angenähert in der Schnittlinie oberhalb oder unterhalb der Hauptachse,
- und **daß** der Korrigierstoß die betreffende Sektormasse zwingt, kurzzeitig während der anschließenden Dauer in verstärktem Maße - oder völlig - in der Hauptebene statt in der bisherigen Abweichebene weiterzurotieren, oder sogar darüber hinaus eher in einer Schwenkebene weiterzurotieren, die einen negativen Winkel zur Hauptebene aufweist.

2. Antikippvorrichtung nach Patentanspruch 1,
**dadurch gekennzeichnet,**
- **daß** nahe der Hauptachse zwischen der Sektormasse und der Hauptachse jeweils ein Gelenk (H) angebracht ist, das seinerseits das Schwenken der Sektormasse parallel oder weitgehend parallel zur Richtung der Hauptachse gestattet,
- und **daß** sich - zumindest in den Zeitabschnitten zwischen zwei Korrigierstößen - diese Sektormasse parallel zur Richtung der Hauptachse frei bewegen kann.

3. Antikippvorrichtung nach Patentanspruch 1 oder 2,
**dadurch gekennzeichnet,**
- **daß** die Schwungmasse in nur zwei Sektormassen aufgeteilt ist (Fig. 7 und 8).

4. Antikippvorrichtung nach Patentanspruch 1, 2 oder 3,
**dadurch gekennzeichnet,**
- **daß** mehrere, in Sektormassen aufgeteilte Schwungmassen nebeneinander auf der gemeinsamen Hauptachse angebracht sind,
- und **daß** diese nebeneinander angebrachten Schwungmassen im Betrieb gleichzeitig und gleichsinnig rotieren (Fig. 7 und 8).

5. Antikippvorrichtung nach einem der vorhergehenden Patentansprüche,
**dadurch gekennzeichnet,**
- **daß** ihre Fixiereinrichtung zumindest beim Fahren in scharfen Kurven sowohl im oberen (OU) als auch im unteren Umlaufpunkt (UU) den Korrigierstoß auf die betreffende Sektormasse mittels eines oder mehrerer Ablenkelemente (EM, Fig. 4 und 5) erzeugt.

6. Antikippvorrichtung nach Patentanspruch 5,
**dadurch gekennzeichnet,**
- **daß** die Fixiereinrichtung nahe dem oberen und/oder unteren Umlaufpunkt (OU/UU) als Ablenkelement ein oder mehrere Elektromagnetpaare (EM) enthält, wobei jeweils der eine Elektromagnet links und der andere rechts der Hauptebene so angebracht sind, daß ihre Magnetfeldlinien mehr oder weniger quer zur Hauptebene orientiert sind,
- **daß** die Sektormassen jeweils durch den Spalt zwischen den beiden Elektromagneten der Elektromagnetenpaare hindurchrotieren,
- und **daß** die Sektormassen zumindest dort ferromagnetische (weichmagnetische und/oder hartmagnetische) Bereiche aufweisen, wo sie durch den Spalt hindurchrotieren.

7. Antikippvorrichtung nach einem der vorhergehenden Patentansprüche, insbesondere nach Patentanspruch 2 und 5,
**dadurch gekennzeichnet,**
- **daß** in den Gelenken der Sektormassen als Ablenkelemente jeweils piezoelektrische und/oder magnetostriktive Elemente eingefügt sind, die - betätigt durch einen kurzen elektrischen Korrigierstoßimpuls - das betreffende Gelenk kurzzeitig jeweils blockieren und dadurch während der Blockade kein Schwenken der betreffenden Sektormasse zulassen, so daß die betreffende Sektormasse aus ihrer bisherigen Abweichebene herausgedrängt und zum Rotieren in der oder nahe der Hauptebene gedrängt wird.

8. Antikippvorrichtung nach einem der Patentansprüche 5 bis 7,
**dadurch gekennzeichnet,**
- **daß** die Fixiereinrichtung einen oder mehrere Rotationsebenensensoren enthält, die den momentanen Abweichwinkel ermitteln,
- und **daß** die Stärke der Korrigierstöße abhängig ist von der Größe der ermittelten momentanen Abweichwinkel

9. Antikippvorrichtung nach Patentanspruch 8, bevorzugt auch nach Patentanspruch 3 oder 4,
**dadurch gekennzeichnet,**
- **daß** die Rotationsebenensensoren jeweils mindestens einen Magneten, z.B. Permanentmagneten, sowie mindestens eine Sensorspule aufweisen (Fig. 6),
- **daß** nämlich die Sektormassen in der Nähe ihrer Gelenke jeweils magnetische, z.B. permanentmagnetische, Bereiche (N-S) aufweisen,
- und **daß** die Hauptachse in der Nähe der magnetischen Bereiche jeweils Sensorspulen (SS) aufweisen, die an die Steuereinheit (SE) Ströme bzw. Spannungen als - induktiv von den magnetischen Bereichen (N-S) erzeugte - Sensorsignale liefern, die ihrerseits vom Abweichwinkel der betreffenden Sektormasse abhängen.

10. Antikippvorrichtung nach Patentanspruch 8,
**dadurch gekennzeichnet,**
- **daß** die Rotationsebenensensoren Lichtschranken (LS/LE, Fig. 4) sind, die die Position der rotierenden Sektormassen überwachen.

11. Antikippvorrichtung nach einem der vorhergehenden Patentansprüche, bevorzugt nach Patentanspruch 5,
**dadurch gekennzeichnet,**
- **daß** die Fixiereinrichtung hydraulisch wirkende Ablenkelemente (V/HS/HF/GE/KN, Fig. 17) enthält, wobei die betreffende Sektormasse (A, B, C, A', B', C') jeweils entsprechend ihres Schwenkens innerhalb ihres Schwenkbereiches (δ) jeweils über einen Wandler (Kolben KN) auf eine hydraulische Füllung HF (Hydrauliköl HF) eines hydraulischen Systems (HS) so einwirkt, daß die hydraulische Füllung die Tendenz hat, zu fließen, sobald die betreffenden Sektormasse in etwa parallel zur Richtung der Hauptachse geschwenkt wird,
- **daß** das Fließen der hydraulischen Füllung (HF) im hydraulischen System (HS) jeweils durch ein Ventil (V) gesteuert wird,
- **daß** nämlich das Ventil (V) das Fließen blockiert, während sich die betreffende Sektormasse angenähert im oberen oder unteren Umlaufpunkt (OU/UU) befindet,
- und **daß** aber das Ventil (V) das Fließen mehr oder weniger stark zuläßt, während sich die betreffende Sektormasse abseits dieses Umlaufpunktes befindet.

12. Antikippvorrichtung nach Patentanspruch 11,
**dadurch gekennzeichnet,**
- **daß** das Ventil (V) jeweils durch einen Drehwinkelsensor (Laufrolle LR im Führungselement/Ovalring FE) gesteuert wird, der seinerseits mehr oder weniger genau jenen Drehwinkel feststellt, um den die betreffende Sektormasse jeweils noch von oberen und/oder unteren Umlaufpunkt entfernt ist.

13. Antikippvorrichtung nach einem der vorhergehenden Patentansprüche,
**dadurch gekennzeichnet,**
- **daß** der Schwenkbereich (δ, Fig. 4 und 5), um den die Sektormassen seitlich geschwenkt werden können, durch mechanische Mittel (ZS, FS) auf Werte unterhalb von ±5°, z.B. auf ±3°, begrenzt ist.

14. Antikippvorrichtung nach einem der vorhergehenden Patentansprüche, insbesondere nach Patentanspruch 13,
**dadurch gekennzeichnet,**
- **daß** während der Startphase des Fahrzeuges und/oder nach dem Abschalten der Zündung des Fahrzeugmotors der Abweichwinkel jeder Sektormasse - z.B. mittels bei auf waagrechter Fläche aufrecht stehendem Fahrzeug zu den betreffenden Zeiten an die Sektormassen angelehnte Führungsschienen (FS, Fig. 3) - jeweils kleiner ist (±1°) als der Schwenkbereich zulassen würde.

15. Antikippvorrichtung nach einem der vorhergehenden Patentansprüche,
**dadurch gekennzeichnet,**
- **daß** ihre Hauptachse durch Schleifringe (SR, Fig. 7) umringt ist, über welche die elektrischen Ströme bzw. Spannungen zu den jeweils rotierenden Teilen hin und/oder von den rotierenden Teilen weg geleitet werden können.

16. Antikippvorrichtung nach einem der vorhergehenden Patentansprüche,
**dadurch gekennzeichnet,**
- **daß** die Schwungmasse in einer dichten, mehr oder weniger evakuierten Kapsel (K, Fig. 5) angebracht ist, in der die Schwungmasse im Betrieb rotiert.

17. Antikippvorrichtung nach einem der vorhergehenden Patentansprüche,
**dadurch gekennzeichnet,**
- **daß** die Stärke der Korrigierstöße einen solchen Wert hat, daß die Sektorenmassen nach diesem Stoß zunächst mehr oder weniger in ihrer Hauptebene weiterrotieren.

18. Antikippvorrichtung nach einem der vorhergehenden Patentansprüche,
**dadurch gekennzeichnet,**
- **daß** ein Fahrzeugverhaltensensor die auf das Fahrzeug während einer Kurvenfahrt wirkende Zentrifugalkraft mißt und/oder den Kippwinkel mißt, um den sich das Fahrzeug momentan zur Seite neigt,
- und **daß** die Steuereinheit die Rotationsfrequenz der Sektormassen und/oder die Stärke der Korrigierstöße abhängig von der Größe dieser gemessenen momentanen Zentrifugalkraft und/oder von der Größe dieses gemessenen momentanen Kippwinkels wählt.

19. Antikippvorrichtung nach einem der vorhergehenden Patentansprüche,
**dadurch gekennzeichnet,**
- **daß** ihre Antikippkraft die Kipptendenz des Fahrzeuges überkompensiert, indem die Antikippkraft, z.B. durch besonders hohe Rotationsgeschwindigkeit, so stark erhöht ist, daß sich das Fahrzeug bei Kurvenfahrten, insbesondere bei Ausweichmanövern, verhält als ob - falls keine Antikippvorrichtung angebracht wäre - sein Schwerpunkt tiefer als die Fahrbahnebene statt oberhalb der Fahrbahnebene wäre.

20. Antikippvorrichtung nach einem der vorhergehenden Patentansprüche,
**dadurch gekennzeichnet,**
- **daß** sie im Fahrzeug doppelt in der Weise angebracht ist, daß die eine Antikippvorrichtung nahe der linken Fahrzeugseitenwand und die andere nahe der rechten Fahrzeugseitenwand.

21. Antikippvorrichtung nach einem der vorhergehenden Patentansprüche,
**dadurch gekennzeichnet,**
- **daß** ein durch den Fahrzeugfahrer voreinstellbares Steuerelement, z.B. ein Schalter oder kontinuierlich einstellbarer Schieber, angebracht ist, der die Rotationsfrequenz der Sektormassen und/oder die Stärke der Korrigierstöße individuell nach den momentanen Wünschen des Fahrzeugfahrers modifiziert.

22. Antikippvorrichtung nach einem der Patentansprüche 17 bis 21,
**dadurch gekennzeichnet,**
- **daß** ein nichtrotierendes, ringförmig in sich geschlossenes, - z.B. zu einem Kreis gebogenes oder ovalähnlich gebogenes oder ein mehrere Windung aufweisendes - Rohr (R, Fig. 9) als hohles Gefäß angebracht ist,
- **daß** das Rohr mit einer Flüssigkeit (FT) gefüllt ist, deren Moleküle die gegeneinander beweglichen Sektormassen bilden, wobei diese Flüssigkeit - im Betrieb von einer Antriebseinheit (AT) angetrieben - im Rohr rings um die Hauptachse (z) schnell so herumrotiert, daß sie (FT) - quer zur Fahrtrichtung (FR) von links her auf das Fahrzeug gesehen - im Uhrzeigersinn rotiert,
- **daß** das Rohr mindestens einen einzigen mit dem Fahrzeug zu verbindenden starren Rohrabschnitt - nämlich zumindest angenähert im oberen Umlaufpunkt (OU) und/oder im unteren Umlaufpunkt (UU) der im Betrieb herumrotierenden Flüssigkeit - enthält, nämlich dort z.B einen metallischen Rohrabschnitt enthält oder dort lokal in einer Halterung starr befestigt ist, wobei die Achse dieses starren Rohrabschnittes (OU/UU), insbesondere damit die dortige Flußrichtung der herumrotierenden Flüssigkeit (FT) - zumindest angenähert parallel zur Fahrtrichtung (FR) orientiert werden kann,
- und **daß** das Rohr zumindest an Rohrsektoren, in denen die Flüssigkeit mehr oder weniger senkrecht zur Fahrtrichtung fließt, einen oder mehrere, mehr oder weniger parallel zur Hauptachse schwenkbare Rohrsektoren - z.B. hergestellt aus nachgiebigem Gummischlauch - enthält, die, veranlaßt durch die Trägheitskräfte der herumrotierenden Flüssigkeitsmoleküle, mehr oder aus der Hauptebene heraus hin zur Abweichebene schwenken können, so daß die Flüssigkeit innerhalb dieser Rohrsektoren mehr oder weniger in der Abweichebene herumrotieren kann.

23. Antikippvorrichtung nach Patentanspruch 22,
**dadurch gekennzeichnet,**
- **daß** die Antriebseinheit (AT, Fig. 9) einen oder mehrere ferromagnetische, an den Querschnitt des nicht-ferromagnetischen Rohres (R) angepaßte Antriebskörper (AR, Fig. 13) enthält, die (AR), im Betrieb von durch die Steuereinheit (SE) gesteuerten Antriebsspulen (AE) angetrieben, entlang der Rohrachse im Rohr mit der Flüssigkeit (FT) herumrotieren.

24. Anwendung der Antikippvorrichtung nach einem der vorhergehenden Patentansprüche, insbesondere nach Patentanspruch 17,
**dadurch gekennzeichnet,**
- **daß** die Antikippvorrichtung doppelt vorhanden ist (Fig. 14 bis 16),
- **daß** ihre beiden, die Sektormassen aufweisenden Schwungmassen im Betrieb im gegenläufigen Sinne schnell rotieren,
- **daß** ihre Schwungmassen - in der Regel leicht schräg - so übereinander angeordnet sind, daß deren beide Hauptachsen zwar mehr oder weniger senkrecht statt waagrecht zur Fahrbahn orientiert sind und mehr oder weniger fluchten, daß aber diese beiden Hauptachsen (z1, z2, Fig. 14) gegeneinander schwenkbar sind, indem
• mindestens eine der beiden erfindungsgemäßen Antikippvorrichtungen auf der einen Seite mittels eines - mindestens ein Gelenk aufweisenden - Gerüstes (G) schwenkbar angebracht ist,
• und mindestens eine der beiden erfindungsgemäßen Antikippvorrichtungen auf der anderen Seite mittels einer - von einer der beiden Steuereinheiten oder von beiden Steuereinheiten oder von einer gemeinsamen Steuereinheit beider Antikippvorrichtungen gesteuerten - Hebevorrichtung (HG) mehr oder weniger senkrecht zur Fahrbahn hebbar und senkbar ist, wodurch beide Antikippvorrichtungen gegeneinander schwenkbar sind,
und **daß** ein - die Kippneigung des Fahrzeuges und/oder dessen Zentrifugalbeschleunigung messender - Fahrzeugverhaltensensor einer der Steuereinheiten oder beide Steuereinheiten oder die gemeinsame Steuereinheit so steuert, daß diese betreffende Steuereinheit den durch die Hebevorrichtung (HG) erzeugten Winkel zwischen den Richtungen der beiden Hauptachsen (z1, z2) einstellt

25. Antikippkraftgenerator, der das Umkippen eines Fahrzeugs während Kurvenfahrt oder Ausweichmanöver verhindert,
**dadurch gekennzeichnet,**
**dass** mehrere schnell um eine gelagerte, quer und waagrecht zum Fahrzeug festliegende Achse z, schnell rotierende Sektormassen (A, B, C,...) die Antikippkraft erzeugen, so dass die Drehrichtung der Sektormassen um die Achse z die Gegenrichtung im Verhältnis zu den Drehrichtung der Räder des Fahrzeugs, während der Fahrt ist, wobei die Achse z den Schwerpunkt der rotierenden Sektormassen enthält, und jede einzelne schnell rotierende Sektormasse um eine eigene Achse der Reihe H, die tangential zu einem Kreis, dessen Plan rechtwinklig zu der Achse z ist und dessen Zentrum die Achse z enthält, angeordnet sind, in einem begrenzten Winkel (δ) drehbar ist, mit einem elektrohydraulischen System ausgestattet ist, dass die entstehenden Schwingungen - während das Fahrzeug Ausweichmanöver absolviert oder Kurven fähr - der Sektormassen um die Achsen der Reihe H mit einer Frequenz, welche die Umdrehungen pro Sekunde der Sektormassen um die Achse z entspricht, gezielt und für jede Sektormasse einzeln in eine bestimmte Richtung dämpft und das nur, wenn der Schwerpunkt jeder Sektormasse sich in einem engen Sektor bzw. Phase (α,β) der eine senkrechte Achse Y zu der Achse z enthält, befindet (Fig.2).

## Claims

1. Anti flip-over device,
- which switched on the flip-over posibility during curve journeys of a vehicle especially at evasive actions dismantles or removes,
- containing a swing mass (A, B, C, ...) which rotates fast around a main axis (z) closer for her part at least crossways to the direction of the traffic and which essentially horizontally related to a flat horizontal road in which the swing mass rotates clockwise, seen crossways to the direction of the traffic from the left side on the vehicle,
- the main emphasis of the rotating swing mass closer at least is on the main axis, thereby marked,
- the swing mass along its size in at least two against each other mobile sector masses is partitioned (A, B, C, ..., fig. 2),
- each of the sector masses in its fastening on a flat road is namely one by one so swivelling respectively parallel or largely parallel to the direction of the main axis around its fastening (H, fig. 3) at the main axis, that
• at straight driving the tendency has to rotate in a main level lying vertically to the main axis,
• but in a curve, driven by inertial forces within a finite angle these for their part unite a divergent angle the trend to rotate in an divergent level in a curve, -- called -- to the main level this one shows vertically to the main axis so that the main level and the divergent level intersect in an intersection line (OU/UU, fig. 2) as well as vertically to the short-term direction of the traffic (FR) proceeds, brought closer at all events,
- that fixing facilities (SE, EM, LS/LE, S, fig. 4) are appropriate, these at least during curve journeys by means of one or several deflecting element (EM) exert a short correcting push on at least one of the sector masses as soon as the main emphasis of this sector mass is in the upper (OU) or lower circulation point (UU) at least brought closer during hers of rotating around the main axis therefore brought closer in the intersection line above or below the main axis,
- and the deflektor push impulse forces the sektor mass for a very short time, partitial or complete to rotate further in the main axis instead of or even to rotate over the swivelling level, which is situated in a negative angle compared to main axis.

2. Anti flip-over device after patent claim 1, thereby marked,
- that near the main axis, between the sector mass and the main axis, respectively one joint (H) is placed, which allows the sector mass to swing parallel to direction of the main axis,
- and that this sector mass can freely move parallel to the direction of the main axis at least in the periods of time between two deflektor impulses.

3. Anti flip-over device after patent claim 1 or 2, thereby marked,
- that the swing mass is divided up into only two sector masses (fig. 7 and 8).

4. Anti flip-over device after patent claim 1, 2 or 3, thereby marked,
- that more, into sector masses partitioned swing masses are attached besides each other on the common main axis,
- and that these swing masses attached besides each other rotate at the same time and codirectionally (fig. 7 and 8).

5. Anti flip-over device after one of the previous patent claims, thereby marked,
- that her fixing facilities at least when driving (OU) in sharp curves both in the upper one and in the lower circulation point (UU) sector mass concerning the correcting push on these, is been produced by deflektor elements (EM, fig. 4 and 5).

6. Anti flip-over device after patent claim 5, thereby marked,
- that the fixing facilities near upper or lower circulation point, one or more electromagnet pairs as deflektor elements are placed, which on the right and left side of the main level are so appropriate that their magnet lines of force are orientated more or less crossways to the main level that the fixing facilities contain (EM) near the upper and/or lower circulation point (OU/UU) as deflektor element,
- the sector masses that respectively by the opening between the two electromagnets of the electric magnet pairs in through rotate,
- and that the sector masses shows there ferromagnetic (soft magnetically and/or hard magnetically) areas at least, where by the opening through rotate.

7. Anti flip-over device after one of the previous patent claims, particularly after patent claim 2 and 5, thereby marked,
- that in the joint of the sektor masses there are respectively piezoelectric and/or magnetostrictive elements as deflektor elements, which affected joint for a very short time blocks and this way during the blockade they are divergent level pressing out from her previous one and pressing for rotating in the or near the main level that respectively are inserted in the joints of the sector masses as deflector elements, these block the joint in question for a short time, pressed by a short electrical correcting push impulse, and none allow swivel of the sector mass in question by which during the blockade so that the sector mass in question.

8. Anti flip-over device after one of the patent claims 5 to 7, thereby marked,
- that the fixing facilities contains one or several rotation level sensors which find out the momentally deviating level,
- and that the strength of the correcting pushes is dependent of the size of the short-term deviating level.

9. Anti flip-over device after patent claim 8, preferential also after patent claim 3 or 4, thereby marked,
- that the rotation level sensors contain at least one magnet, e.g. permanent magnets, as well as at least one sensor spool respectively (fig. 6),
- that namely the sector masses nearby her joints respectively magnetic areas (N-S), e.g. permanent magnetic contains,
- and that the main axis nearby of the magnetic areas (of N S) contains sensor coil (SS), which at the control unit (SE) currents or tensions inductively produced through magnetic area, deliver sensor signals which for their part depends on the divergent angle of the sector mass in question.

10. Anti flip-over device after patent claim 8, thereby marked,
- that the rotation level sensors are light barriers (LS/Le, fig. 4) which supervise the position of the rotating sector masses.

11. Anti flip-over device after one of the previous patent claims, preferential after patent claim 5, thereby marked,
- over a transducer (piston KN) so HF (hydraulic oil HF) of a hydraulic system (HS) respectively has an effect over affected sector masses (A, B, C, A', B', C') on a hydraulic filling that the hydraulic filling has the tendency to flow that the fixing facilities hydraulicly deflector elements (V/HS/HF/GE/KN, fig. 17) contains, in which the sector mass in question respectively according to its swivel within its jib range (δ), sector mass is swung over approximately parallel to the direction of the main axle as soon as concerning this one,
- the flow the hydraulic filling (HF) in the hydraulic system (HS) that respectively by a valve (V) is headed,
- that the valve (V) blocks flowing namely while the sector mass in question brought closer is in the upper or lower circulation point (OU/UU),
- and that the valve (V), however, allows flowing more or less strongly while the sector mass in question is been away from this circulation point.

12. Anti flip-over device after patent claim 11, thereby marked,
- the valve (V) respectively, sector mass respectively still of upper and/or concerning this one therefore lower circulation point, remotely headed by a trick twinkle box (caster LR in the leadership element/oval ring Fe) which for his part states more or less exactly that angle of rotation that is.

13. Anti flip-over device after one of the previous patent claims, thereby marked,
- the jib range the sector masses can be swung over at the side therefore, (ZS, FS) is limited on values below from ± 5° e.g. on ± 3° by mechanical means (fig. 4 and 5).

14. Anti flip-over device after one of the previous patent claims, particularly after patent claim 13, thereby marked,
- that during the start phase of the vehicle and/or after switching off the ignition of the vehicle engine of the divergent angle of every sector mass - by means of e.g. smaller than the jib range would allow guide rails (± 1°) (FS, fig. 3) leant against the sector masses at vehicle standing upright on a horizontal area at the times in question.

15. Anti flip-over device after one of the previous patent claims, thereby marked,
- that its main axis is surrounded by dragging rings over which the electric currents or tensions can be conducted to the rotating parts to and/or of the rotating parts away (SR, fig. 7).

16. Anti flip-over device after one of the previous patent claims, thereby marked,
- that the swing mass is in a vakuum capsule built in, in which the swing mass rotates (K, fig. 5).

17. Anti flip-over device after one of the previous patent claims, thereby marked,
- the correcting pushes for sector masses such a strength deflection caused, after this push next to more or some in its main level further rotate.

18. Anti flip-over device after one of the previous patent claims, thereby marked,
- that one vehicle behaving sensor measures the centrifugal force having an effect on the vehicle during a curve journey and/or the tilt angle around which the vehicle aside is inclining at the moment measures that,
- and that the control unit chooses the rotation frequency of the sector masses and/or the strength of the correcting pushes depending on the size of this measured short-term centrifugal force and/or on the size of this measured short-term tilt angle.

19. Anti flip-over device after one of the previous patent claims, thereby marked,
- that its anti flip-over force, the vehicle flip force over compensated, by being increased of the rotation speed of sector masses so strongly, that the vehicle behaves in case of curve journeys particularly at evasive actions as if, if no anti flip-over device were appropriate, be main emphasis deep than the road level instead of.above the road level would be that the tipping over trend of the vehicle about.

20. Anti flip-over device after one of the previous patent claims, thereby marked,
- that it is attached twice in the way in the vehicle, that near the right and left side in the vehicle.

21. Anti flip-over device after one of the previous patent claims, thereby marked,
- that a preselectable control element, e.g. a switch or continuously adjustable slide, is appropriate and can be adjustet by the driver who individually modifies the rotation frequency of the sector masses and/or the strength of the correcting pushes according to the short-term wishes of the vehicle driver.

22. Anti flip-over device after one of the patent claims 17 to 21, thereby marked,
- that a pipe (R, fig. 9) is attached as a hollow vessel that is not rotating, closed into himself ring-likely-e.g. turned to a circle or turned oval similarly or one more meander showing,
- sector masses form by the molecules for this against each other that the pipe is filled a mobile liquid (FT), in which around rotated this liquid in the pipe around the main axle (z) all around so fast that it (FT) rotates clockwise, seen crossways to the direction of the traffic (FR) from the left side on the vehicle, driven in the operation of a drive unit (OT),
- the pipe contains that unite an only rigid pipe section to be connected with the vehicle at least --brought closer namely at least in the upper circulation point (OU) and/or in the lower circulation point (UU) of the liquid around rotating in the function , namely there e.g. a metallic pipe section contains or fasten there locally in a mount rigidly, in which the axis of this rigid pipe section (OU/UU), the flow direction of the around rotating liquid (FT) there can particularly so that -- be orientated at least brought closer parallel to the direction of the traffic (FR),
- the pipe at least to pipe sectors in which the liquid more or less vertically flows to the direction of the traffic, one or several, more or less parallel to the main axis swivelling pipe sectors, contains and that --e.g. produced from a soft rubber tube --, be able to swing which more or from the main level out to the divergent level, arranged by the inertial forces of the around rotating liquid molecules, so that the liquid can more or less in the divergent level rotate within these pipe sectors.

23. Anti flip-over device after patent claim 22, thereby marked,
- that the drive unit (AT, fig. 9) with one or more ferromagnetic devices on the non-ferrmagnetic pipe cross-section in the operation of drive coil (AE) steered by the control unit (SE) driven along the pipe axis in the pipe with the liquid of (FT) rotating contains one or several drive bodies which are ferromagnetic and adapted to the cross-section of the non-ferromagnetic pipe (R) (are, fig. 13).

24. Application of the anti flip-over device after one of the previous patent claims, particularly after patent claim 17,
thereby marked,
- that the anti flip-over device is twice available (fig. 14 to 16),
- that its swing masses which are two and the sector masses showing rotate fast in the contrary meaning in the business,
- as a rule, its swing masses easily at an angle -- so are ordered about each other that although the two main axis are oriented and cursed more or less more vertically instead of horizontal to the road that these two main axis (z1, z2, fig. 14) are, however, swivelling against each other that -- by
• at least one of the two anti flip-over devices is attached by a trestle (G) swivellingly according to invention on this one unite side by means of one, at least a joint showing,
• and at least one of the two anti flip-over devices according to invention on the other side by means of one of the two control units or of the two control units or of a common control unit of both anti flip-over devices controlled - more or less vertically to the road raising destitute and lowering destitute of hoist (HG), by something two anti flip-over devices, against each other are swivelling,
- so one of the control units or both control units or the common control unit heads one for sensor that this control unit in question adjusts the angle produced by the hoist (HG) between the directions of the two main axis (z1, z2) and that - the tipping over inclination of the vehicle and/or its centrifugal acceleration measuring - vehicle behaving,

25. Anti flip-over force generator, which the tip over a vehicle during the curve journey or evasive action prevented,
thereby marked,
that more fast rotating sector masses (A, B, C) around fixed stored axis, seen to the vehicle crossways and horizontally, that produce the anti flip-over force so that the direction of sector mass rotation while the vehicle is been driven, how the sector masses around the axis z the axis z contains the main emphasis of the rotating sector masses and every single for the rotating sector mass around an own axis of the row of H fast in proportion to, which tangentially right-angledly is z to the axis to a circle, its plan and its center the axis contains z, the opposite direction is ordered, direction of rotation of the wheels of the vehicle is rotatable in a restricted angle is equipped with a system which electrically hydraulic controlled, that lasting the arising vibration the vehicle goes through evasive actions or drives curves this one corresponds to turns per second of the sector masses around the axis z around the axes of the row of H with a frequency, which one, the sector mass specifically and for every sector mass one by one is damped in a certain direction and this only, if the main emphasis of every sector mass himself in a narrow sector phase (α, β).

## Revendications

1. Dispositif anti-basculement,
qui, en fonctionnement, réduit ou annule le danger de renversement d'un véhicule roulant dans les virages, en particulier pendant les manoeuvres effectués pour éviter un autre véhicule,
qui contient un volant d'inertie (A, B, C,...), qui, en fonctionnement, fait généralement une rotation rapide autour d'un axe principal (z), lequel est lui-même disposé au moins à peu près perpendiculairement à la direction de conduite du véhicule et qui est- par rapport à une route plane et horizontale - essentiellement disposé à l'horizontale et où le volant d'inertie, fait une rotation dans le sens des aiguilles perpendiculairement à la direction de conduite du véhicule, en voyant le véhicule de la gauche,
où le centre de gravité du volant d'inertie en rotation est au moins approximativement dans l'axe principal,
se **caractérise par** ceci,
- que la masse oscillante est partagée le long de son périmètre en au moins deux masses sectorielles (A, B, C, ..., fig. 2) pouvant mouvoir l'une par rapport à l'autre, il faut savoir que chaque masse sectorielle peut pivoter de la sorte qu'elle tourne séparément elle-même autour de sa fixation (H, fig. 3) parallèlement à l'axe principal ou le plus parallèlement possible par rapport à l'axe principal, et que la masse sectorielle concernée est orientable - en fonctionnement sur une route plane -
• qu'en roulant tout droit, elle a tendance, à faire une rotation sur une surface plane verticalement situé par rapport à l'axe principal,
• par contre, dans un virage, activée par des forces d'inertie, elle tend à faire une rotation sur un plan qui dévie, lequel présente un angle fini - appelé l'angle de déviation positif-et qui se présente vers le plan principal de la sorte que le plan principal et le plan de déviation se croisent dans une ligne d'intersection (OU/UU, fig. 2), qui suit verticalement par rapport à l'axe principal et - en tout cas approximativement verticalement par rapport au sens de déplacement momentané du véhicule (FR),
qu'un dispositif de fixation (SE,EM, LS/LE, S, fig. 4) est aménagé, qui exerce, au moins pendant que le véhicule roule dans un virage, une courte impulsion de correction au moins sur une des masses sectorielles au moyen d'un ou de plusieurs éléments d'éloignement (EM), aussitôt que le centre de gravité de cette masse sectorielle en rotation autour de l'axe principal se trouve au moins approximativement au point de rebroussement supérieur (OU)
ou inférieur (UU) - c. à d. approximativement dans la ligne d'intersection au-dessus ou en-dessous de l'axe principal,
et que l'impulsion de correction force cette masse sectorielle brièvement-puis plus tard pendant la durée qui suit d'une façon accrue - ou complètement-à continuer sa rotation dans le plan principal et non dans le plan de déviation, ou même de tourner au-delà dans un plan de changement de direction, qui présente un angle négatif par rapport au plan principal.

2. Dispositif anti-basculement d'après revendication de brevet 1
qui se **caractérise par** ceci,
qu'une rotule (H) est chaque fois aménagée près de l'axe central entre la masse sectorielle et l'axe central, celle-ci permet le changement de direction de la masse sectorielle parallèlement
ou d'une façon largement parallèle par rapport à la direction de l'axe central,
et que cette masse sectorielle peut se mouvoir librement parallèlement par rapport au sens de l'axe central - au moins durant les périodes entre deux impulsions de correction.

3. Dispositif anti-basculement d'après revendication de brevet 1 ou 2,
qui se **caractérise par** ceci,
que le volant d'inertie n'est partagée qu'en deux masses sectorielles (Fig. 7 et _8).

4. Dispositif anti-basculement d'après revendication de brevet 1, 2 ou 3,
qui se **caractérise par** ceci,
que plusieurs volants d'inertie, partagés en masses sectorielles, sont aménagés les uns à côté des autres sur l'axe principal commun,
et que ces masses aménagées les unes à côté les autres sont en rotation au même moment et de la même façon (fig. 7 et 8), du moment qu'elles sont en fonctionnement.

5. Dispositif anti-basculement d'après une des revendications de brevet précédées,
qui se **caractérise par** ceci,
que leur dispositif de fixation produit - au moins pendant la conduite dans des virages accentués - l'impulsion de correction aussi bien dans le point de rebroussement supérieur ( OU) qu'inférieur (UU) sur la masse sectorielle concernée au moyen d'un ou de plusieurs éléments de déviation (EM, fig. 4 et 5).

6. Dispositif anti-basculement d'après revendication de brevet 5
qui se **caractérise par** ceci,
que le dispositif de fixation contient un ou plusieurs couples d'électro-aimants (EM), situés à proximité du point de rebroussement supérieur et/ou inférieur (OU/UU), comme élément de déviation, où chaque fois l'un des aimants se trouve à gauche et l'autre à droite du plan principal de la sorte que leurs lignes de champs magnétiques sont plus ou moins orientées perpendiculairement par rapport au plan principal,
que les masses sectorielles tournent chaque fois autour de leur axe à travers la fente entre les deux électro-aimants des couples d'électro-aimants, et que les masses sectorielles présentent au moins ici des sphères ferromagnétiques (faiblement magnétiques et/ou fortement magnétiques), où elles pénètrent en rotation à travers la fente.

7. Dispositif anti-basculement d'après une des revendications de brevet précédées, en particulier d'après les revendications de brevet 2 et 5,
qui se **caractérise par** ceci,
que des éléments piézo-électriques et/ou magnéto-strictifs sont aménagés dans les articulations des masses sectorielles, qui - activés par une impulsion de correction brève-bloquent chaque fois brièvement l'articulation concernée et de la sorte ne permettent pas un basculement de la masse sectorielle durant le blocage, de la sorte que la masse sectorielle concernée est poussée hors de son plan de déviation initiatique et est forcée à tourner autour de son axe dans ou près du plan principal.

8. Dispositif anti-basculement d'après une des revendications de brevet 5 à 7
qui se **caractérise par** ceci,
que le dispositif de fixation contient un ou plusieurs capteurs-de-rotation-de-plan, qui évaluent l'angle de déviation momentané,
et que la force des impulsions de correction dépend de la taille des angles de déviation momentanés évalués.

9. Dispositif anti-basculement d'après la revendication de brevet 8, et encore davantage 10 d'après les revendications de brevet 3 ou 4,
qui se **caractérise par** ceci,
que les capteurs-de-rotation-de-plan présentent chaque fois au moins un aimant, par ex. des aimants permanents, et au moins une bobine de capteur (fig. 6),
que les masses de capteurs présentent près de leurs articulations chaque fois des zones (N-S) magnétiques, par ex. magnétiques-permanentes,
et que l'axe principal présente chaque fois des bobines de capteurs (SS) à proximité des zones magnétiques, qui délivrent des courants ou plutôt des tensions, produits d'une façon inductive par les zones magnétiques (N-S) comme signaux de capteurs, vers le bloc de commande (SE), et ces signaux de capteurs dépendent eux-mêmes de l'angle de déviation de la masse sectorielle concernée.

10. Dispositif anti-basculement d'après la revendication de brevet 8,
qui se **caractérise par** ceci,
que les capteurs-de-rotation-de-plan sont des cellules photo-électriques (LS/LE, fig. 4), qui surveillent la position des masses sectorielles en rotation.

11. Dispositif anti-basculement d'après une des revendications de brevet précédées, en favorisant la revendication de brevet 5,
qui se **caractérise par** ceci,
que le dispositif d'installation contient des éléments de déviation (V/HS/HFGE/KN, fig. 17) agissant de la façon hydraulique, où la masse sectorielle (A, B, C, A', B', C') influence selon chaque déviation concernée à l'intérieur de son plan de déviation (δ) chaque fois à l'aide d'un convertisseur (vérin KN) le remplissage hydraulique HF (huile hydraulique HF) d'un système hydraulique de la sorte que le remplissage hydraulique (HS) a tendance à fonctionner aussi-tôt que la masse sectorielle est déviée à peu près parallèlement par rapport à l'axe principal,
que l'écoulement du remplissage hydraulique (HF) est conduit dans le système hydraulique (HS) chaque fois à travers une soupape (V),
et c'est que la soupape (V) bloque l'écoulement, pendant que la masse sectorielle concernée se trouve à peu près dans le point de circulation supérieur ou inférieur (OU/UU), mais que la soupape (V) ne permet que plus ou moins la force d'écoulement, tandis que la masse sectorielle concernée se trouve déjà en dehors de ce point de circulation.

12. Dispositif anti-basculement d'après la revendication de brevet 11,
qui se **caractérise par** ceci,
que la soupape (V) est chaque fois commandée par un capteur de mouvement angulaire (rouleau de roulement LR dans l'élément de guidage/anneau ovale FE), et celui-ci détermine plus ou moins précisément l'angle de rotation par lequel la masse sectorielle concernée est encore éloignée du point de circulation supérieur et/ou inférieur.

13. Dispositif anti-basculement d'après une des revendications de brevet précédées,
qui se **caractérise par** ceci,
que le plan de déviation (δ, fig. 4 et 5), autour duquel les masses sectorielles peuvent être déviées, est limité par des moyens mécaniques (ZS, FS) à des valeurs inférieures à ±5°, par ex. à ±3°.

14. Dispositif anti-basculement d'après une des revendications de brevet précédées, en particulier d'après la revendication de brevet 13,
qui se **caractérise par** ceci,
que l'angle de déviation de chaque masse sectorielle est - pendant la phase de départ du véhicule et/ou après fermeture de l'allumage du moteur du véhicule - chaque fois plus petit (±1°) que le permettrait le plan de déviation, et ceci est par ex. provoqué par des rails de guidage (FS, Fig. 3), appuyés à la masse sectorielle aux moments concernés sur un véhicule droit sur un plan horizontal.

15. Dispositif anti-basculement d'après une des revendications de brevet précédées,
qui se **caractérise par** ceci,
que son axe principal est entouré par des anneaux de frottement (SR, fig. 7), par lesquels les courants électriques ou tensions peuvent être guidés chaque fois vers les pièces en rotation et/ou au contraire déviés de ces pièces en rotation.

16. Dispositif anti-basculement d'après une des revendications de brevet précédées,
qui se **caractérise par** ceci,
que la masse de déviation est aménagée dans une capsule (K, fig.5) étanche, plus ou moins vide, à l'intérieur de laquelle la masse de déviation est en rotation durant le fonctionnement.

17. Dispositif anti-basculement d'après une des revendications de brevet précédées,
qui se **caractérise par** ceci,
que la force des impulsions de correction a une telle valeur que les masses sectorielles continuent d'abord encore plus ou moins leur rotation dans leur plan principal après cette impulsion.

18. Dispositif anti-basculement d'après une des revendications de brevet précédées,
qui se **caractérise par** ceci,
qu'un capteur mesurant la conduite du véhicule mesure la force centrifuge pesant sur la voiture pendant qu'elle roule dans un virage et/ou mesure l'angle de basculement autour duquel le véhicule penche, et que l'unité de commande choisit la fréquence de rotation des masses sectorielles et/ou la force des impulsions de correction dépendante du volume de la force centrifuge mesurée momentanément et/ou du volume de l'angle de basculement momentané mesuré.

19. Dispositif anti-basculement d'après une des revendications de brevet précédées, qui se **caractérise par** ceci,
que sa force d'anti-basculement compense au-delà de la tendance de basculement du véhicule en augmentant la force d'anti-basculement, par ex., par une augmentation particulièrement forte de la vitesse de rotation, pour que le véhicule se comporte dans les virages , surtout pendant des manoeuvres pour éviter un autre véhicule, - s'il n'y a pas de dispositif de basculement - comme si son centre de gravité était plus bas que le plan de la route et non au-dessus du plan de la route.

20. Dispositif anti-basculement d'après une des revendications de brevet précédées,
qui se **caractérise par** ceci,
qu'il est installé en double dans le véhicule de la sorte qu'un dispositif anti-basculement se trouve près de la cloison gauche du véhicule et l'autre près de la cloison droite.

21. Dispositif anti-basculement d'après une des revendications de brevet précédées,
qui se **caractérise par** ceci,
installation d'un élément de commande pré-programmable par le conducteur, par ex. un interrupteur ou un curseur - mis au point en fonction continue - modifie individuellement selon les demandes momentanées du conducteur - la fréquence de rotation des masses sectorielles et/ou la force des impulsions de correction.

22. Dispositif anti-basculement d'après une des revendications de brevet 17 à 21,
qui se **caractérise par** ceci,
qu'un tuyau vide (R, fig. 9) est installé comme récipient creux, n'étant pas en rotation, fermé sur lui-même tel un anneau, - par ex. plié en forme d'un cercle ou ressemblant à un ovale ou présentant diverses courbures,
que le tuyau est rempli avec un fluide (FT), dont les molécules forment les masses sectorielles se mouvant les unes contre les autres et que ce fluide - activé pendant le fonctionnement par une unité de transmission (AT) - est à l'intérieur du tuyau tout autour de l'axe principal dans une rotation tellement rapide qu'il (FT) est en rotation dans le sens d'une aiguille d'une montre - perpendiculairement par rapport au sens de la direction de conduite (FR), vu de gauche sur le véhicule, que le tuyau contient au moins une seule section rigide à relier au véhicule - c.-à-d. au moins à proximité dans le point de circulation supérieur (OU) et/ou dans le point de circulation inférieur (UU) du liquide en rotation durant le fonctionnement, qu'il contient à cet endroit par ex. une section de tuyau métallique et qu'il est fixé là dans une fixation rigide, pour pouvoir orienter l'axe de cette section de tuyau (OU/UU) et surtout le sens du courant du liquide (FT) en rotation à cet endroit au moins presque parallèlement au sens de la direction de conduite (FR),
et que le tuyau contient au moins aux sections du tuyau, dans lesquelles le liquide coule d'une façon plus ou moins verticalement par rapport au sens de la direction de conduite (FR), une ou plus de secteurs de tuyau qui peuvent pivoter - par ex. en tuyau de caoutchouc souple - qui sont plus au moins capable de pivoter du plan principal vers le plan de déviation par les forces d'inertie des molécules du liquide en rotation, de sorte que le liquide à l'intérieur de ces secteurs de
tuyau soit plus ou moins en rotation dans le plan de déviation.

23. Dispositif anti-basculement d'après la revendication de brevet 22,
qui se **caractérise par** ceci,
que l'unité de transmission (AT, fig. 9) contient un ou plusieurs corps de commande (AR, fig. 13) ferro-magnétiques adaptés à la section transversale, qui sont commandés - en fonctionnement - par des bobines de commande par le bloc de commande (SE).

24. Dispositif anti-basculement d'après une des revendications de brevet précédées, en particulier d'après la revendication de brevet 17,
qui se **caractérise par** ceci,
que le dispositif anti-basculement est présent en double (fig. 14 à 16),
que les deux masses d'équilibrage contenant des masses sectorielles sont - durant le fonctionnement - en rotation rapide dans le sens contraire,
que ces masses d'équilibrage sont disposées - généralement légèrement en oblique - les unes au-dessus les autres de la sorte que leurs deux axes principaux sont orientés plus ou moins verticalement et non horizontalement par rapport au sens de la direction et qu'elles s'alignent plus ou moins, mais que ces deux axes (z1, z2, fig. 14) peuvent pivoter l'un par rapport à l'autre, car
• au moins un des dispositifs anti-basculement répondant à l'invention est fixé sur un côté au moyen d'un bâti (G) - celui-ci présente au moins une articulation - lui permettant de pivoter,
• et sur l'autre côté, au moins un des dispositifs anti-basculement répondant à l'invention peut se lever ou descendre plus ou moins verticalement par rapport au sens de la direction au moyen d'un dispositif d'élévation (HG) - commandé par une des deux unités de commande ou des deux unités de commande ou d'un bloc de commande commun aux deux dispositifs anti-basculement, de la sorte que les deux dispositifs anti-basculement peuvent pivoter l'un par rapport à l'autre,
et qu'un capteur de régime du véhicule d'un des deux blocs de commande ou des deux blocs de commande ou d'un bloc de commande commun - mesurant l'inclinaison basculante du véhicule et/ou sa vitesse centrifuge - tient lieu de régulateur, de la sorte que ce bloc de commande concerné règle l'angle entre les directions des deux axes principaux (z1, z2) produit par le dispositif d'élévation.

25. Générateur de force basculante, qui empêche le basculement d'un véhicule pendant la manoeuvre dans un virage,
qui se **caractérise par** ceci,
que plusieurs masses sectorielles (A, B,C, ...) en rotation rapide sont disposées autour d'un axe fixe (z), disposé perpendiculairement et horizontalement par rapport au véhicule et qui peut pivoter dans un angle limité (δ), - autour de cet axe (z) sont disposées plusieurs masses sectorielles en rotation rapide (A, B,C, ...) produisant l'anti-force basculante, de sorte que les masses sectorielles autour de l'axe (z) sont dans le sens contraire au sens de rotation des roues du véhicule durant la conduite, de sorte que l'axe (z) contienne le centre de gravité de la masse sectorielle en rotation, et que chacune des masses sectorielles en rotation rapide soit disposée elle-même autour d'un propre axe de la ligne (H), tangentiellement par rapport à un cercle, dans un plan à angle droit par rapport à l'axe (z) et dont le centre contient l'axe (z) et que ce même axe (z) est équipé d'un système électrohydraulique qui permet et ce - avec une fréquence qui correspond à celle produite durant les manoeuvres de déviation par les vibrations produites par les masses sectorielles en tournant autour de l'axe (z), - de contraindre chacune des masses sectorielles -bien définies -dans une certaine direction, mais seulement, quand le centre de gravité de chaque masse sectorielle se trouve dans un secteur étroit, ou une phase (fig. 2), présentant un axe perpendiculaire (y) à l'axe (z).
